# EUROPEAN PATENT APPLICATION

(11) **EP 4 808 062 A1**
(43) Date of publication of application: **16.09.2026**
(21) Application number: 24914953.5
(22) Date of filing: 18.10.2024
(51) Int. Cl.: H04L 27/34

(54) **COMMUNICATION METHOD AND APPARATUS**

(30) Priority: 04.01.2024 CN 202410027556
(71) Applicant: Huawei Technologies Co., Ltd., Shenzhen, Guangdong 518129 (CN)
(72) Inventor: GUAN, Lei, Shenzhen, Guangdong 518129 (CN); LI, Qiang, Shenzhen, Guangdong 518129 (CN)
(74) Representative: Epping - Hermann - Fischer
(86) International application number: PCT/CN2024/125733
(87) International publication number: WO 2025/145736

(57) **Abstract**

This application relates to a communication method and apparatus. A terminal apparatus receives a first signal, and performs fast Fourier transform on the first signal to obtain a second signal, where the second signal includes a frequency-domain modulation symbol. The terminal apparatus performs inverse discrete Fourier transform on the second signal to obtain a third signal, where the third signal includes a time-domain modulation symbol. The terminal apparatus obtains a fourth signal from the third signal. In embodiments of this application, single-carrier OFDM may be used in downlink transmission, thereby reducing a PAPR of the downlink transmission, and improving performance or power efficiency of the downlink transmission. In addition, in embodiments of this application, a signal transmitting end performs discrete Fourier transform on signals of a plurality of users or a plurality of channels together. In this case, after inverse fast Fourier transform is performed on the signals on which discrete Fourier transform is performed, a probability of mutual superimposition of signals of different users or different channels is reduced, thereby further reducing the PAPR.

## Description

### CROSS-REFERENCE TO RELATED APPLICATIONS

This application claims priority to Chinese Patent Application No. 202410027556.3, filed with the China National Intellectual Property Administration on January 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a 4th generation (4th generation, 4G) or 5th generation (5th generation, 5G) communication system, a discrete Fourier transform-spread-orthogonal frequency division multiplexing (discrete Fourier transform-spread-orthogonal frequency division multiplexing, DFT-s-OFDM) waveform is mainly used for uplink transmission, and is commonly referred to as a single-carrier orthogonal frequency division multiplexing (orthogonal frequency division multiplexing, OFDM) waveform. In comparison with a conventional OFDM waveform, for the DFT-s-OFDM waveform, a discrete Fourier transform (discrete Fourier transform, DFT) processing process is added at a signal transmitting end, so that a signal has a lower peak-to-average power ratio (peak-to-average power ratio, PAPR), improving performance or power efficiency of a user equipment (user equipment, UE).

The conventional OFDM waveform is still used in downlink transmission. The conventional OFDM waveform can better match technologies such as multi-channel digital precoding and multi-stream transmission. However, a PAPR of the conventional OFDM waveform is high, which reduces performance or power efficiency of the downlink transmission.

### SUMMARY

Embodiments of this application provide a communication method and apparatus, to introduce single-carrier OFDM in a downlink, so as to improve performance or power efficiency of downlink transmission.

According to a first aspect, a communication method is provided. The method may be performed by a terminal apparatus. The terminal apparatus is, for example, a terminal device, another device including a function of the terminal device, a chip system (or a chip), or another functional module. The chip system or the functional module can implement the function of the terminal device. The chip system or the functional module is, for example, disposed in the terminal device. The method includes: receiving a first signal; performing fast Fourier transform on the first signal to obtain a second signal, where the second signal includes a frequency-domain modulation symbol; performing inverse discrete Fourier transform on the second signal to obtain a third signal, where the third signal includes a time-domain modulation symbol; and obtaining a fourth signal from the third signal.

In this embodiment of this application, single-carrier OFDM may be used in downlink transmission, thereby reducing a PAPR of the downlink transmission, and improving performance or power efficiency of the downlink transmission. In this embodiment of this application, it is considered that the downlink transmission may be that a network apparatus simultaneously sends signals to a plurality of users, or the network apparatus sends signals on a plurality of channels. Therefore, in this embodiment of this application, simultaneous transmission of the signals of the plurality of users or the plurality of channels may be further implemented. For example, the third signal may include a plurality of signals. When the simultaneous transmission of the signals of the plurality of users or the plurality of channels is implemented, in this embodiment of this application, signals of different users or different channels do not need to be scheduled in a time division manner, thereby reducing a signal transmission delay. In addition, a signal transmitting end may perform discrete Fourier transform on the signals of the plurality of users or the plurality of channels together, instead of performing discrete Fourier transform on the signals of different users or different channels separately. Correspondingly, a signal receiving end may perform inverse discrete Fourier transform on received signals together. If the signal transmitting end performs discrete Fourier transform on the signals of different users or different channels separately, after inverse fast Fourier transform is performed on the signals on which discrete Fourier transform is performed, the signals of different users or different channels may be superimposed, causing a PAPR increase. However, in this embodiment of this application, the signal transmitting end performs discrete Fourier transform on the signals of the plurality of users or the plurality of channels together. In this case, after inverse fast Fourier transform is performed on the signals on which discrete Fourier transform is performed, a probability of mutual superimposition of the signals of different users or different channels is reduced, thereby further reducing the PAPR.

In an optional implementation, obtaining the fourth signal from the third signal includes: obtaining the fourth signal from the third signal based on first indication information, where the first indication information indicates a resource position, in a time unit, of a time-domain modulation symbol included in the fourth signal. In this embodiment of this application, the network apparatus may indicate a position of the fourth signal in the third signal, so that the terminal apparatus can accurately obtain the fourth signal from the third signal.

In an optional implementation, that the first indication information indicates the resource position, in the time unit, of the time-domain modulation symbol included in the fourth signal includes: The first indication information indicates a start time-domain modulation symbol of the fourth signal in the time unit, and indicates a quantity of time-domain modulation symbols of the fourth signal in the time unit; the first indication information may indicate an end time-domain modulation symbol of the fourth signal in the time unit, and indicate a quantity of time-domain modulation symbols included in the fourth signal in the time unit; or the like. Indicated content is not limited. The start time-domain modulation symbol of the fourth signal in the time unit is a 1^{st} time-domain modulation symbol included in the fourth signal in the time unit, and the end time-domain modulation symbol of the fourth signal in the time unit is a last time-domain modulation symbol included in the fourth signal in the time unit. The "1^{st} time-domain modulation symbol" and the "last time-domain modulation symbol" herein are both described in a time sequence.

In an optional implementation, the method further includes: determining, based on second indication information, a time domain resource and a frequency domain resource that are occupied by the third signal. The terminal apparatus can receive the third signal by using the second indication information. For example, in this embodiment of this application, the network apparatus may indicate the third signal, so that the terminal apparatus can receive the third signal.

In an optional implementation, the method further includes: receiving first information, where the first information is used to schedule the fourth signal, the first information includes the first indication information, and the first indication information indicates the resource position, in the time unit, of the time-domain modulation symbol included in the fourth signal. The first indication information may be from the network apparatus. For example, before a UE receives the first signal, or before the network apparatus sends the first signal, the network apparatus may send the first information to the UE, where the first information may be used to schedule the fourth signal, and the first indication information may be included in the first information. For example, the first information is included in a PDCCH. For example, the first information is DCI. Alternatively, the first information may be included in RRC signaling. Alternatively, the first information may be included in signaling of another protocol layer, for example, a MAC CE. This is not limited.

In an optional implementation, the first information further includes third indication information, and the third indication information indicates a modulation and coding scheme of the fourth signal. To demodulate the fourth signal, the terminal apparatus needs to use the modulation and coding scheme of the fourth signal. The network apparatus may indicate the modulation and coding scheme of the fourth signal by using the third indication information, so that the terminal apparatus can demodulate the fourth signal.

In an optional implementation, the method further includes: determining, based on the first indication information and the third indication information, a transport block size corresponding to the fourth signal. In this embodiment of this application, the terminal apparatus may need to receive only the fourth signal in the third signal. Therefore, the terminal apparatus may determine, based on the first indication information, the transport block size corresponding to the fourth signal, instead of determining, based on time domain resource indication information included in the second indication information, the transport block size corresponding to the fourth signal, so that the terminal apparatus can correctly receive the fourth signal.

In an optional implementation, obtaining the fourth signal from the third signal includes: determining at least one candidate control channel from the time-domain modulation symbol included in the third signal, where each candidate control channel includes L control channel elements, each control channel element includes at least one time-domain modulation symbol, and L is a positive integer; and detecting the at least one candidate control channel. For example, if the fourth signal is a control channel, the terminal apparatus may obtain the fourth signal in a detection manner, and a process of the detection is, for example, blind detection. In this embodiment of this application, the candidate control channel includes a time-domain modulation symbol, and the fourth signal also includes a time-domain modulation symbol, so that the terminal apparatus can detect the fourth signal.

In an optional implementation, determining the at least one candidate control channel from the time-domain modulation symbol included in the third signal includes: determining a start control channel element in the time-domain modulation symbol included in the third signal; and determining the at least one candidate control channel based on the start control channel element and a quantity of candidate control channel detections. The terminal apparatus may perform detection based on the start control channel element and the quantity of candidate control channel detections, to determine the at least one candidate control channel.

In an optional implementation, the third signal includes the fourth signal and a fifth signal, and the fourth signal and the fifth signal are time division multiplexed in one OFDM symbol. In this embodiment of this application, different signals may be time division multiplexed in one OFDM symbol, so that a time division multiplexing granularity is reduced, and time domain resource utilization can be improved.

In an optional implementation, the third signal includes the fourth signal and a fifth signal, the fourth signal is carried on a first channel, and the fifth signal is carried on a second channel. The fourth signal and the fifth signal may be carried on a same channel, or may be carried on different channels. This is not limited. In addition, target receiving ends of the fourth signal and the fifth signal may be a same terminal apparatus, or may be different terminal apparatuses. This is equivalent to that in this embodiment of this application, signals of a plurality of users and/or a plurality of channels can be sent, and a PAPR can be reduced.

In an optional implementation, the first channel is a physical downlink control channel, the second channel is a physical downlink shared channel, and the first channel is used to schedule the second channel; the first channel and the second channel each are a physical downlink control channel; or the first channel and the second channel each are a downlink common channel. These are only some examples. Implementations of the first channel and the second channel are not limited in this embodiment of this application.

In an optional implementation, the third signal includes the fourth signal and a fifth signal, and the method further includes: receiving a demodulation reference signal, where the demodulation reference signal is used for channel estimation of the fourth signal and the fifth signal, and/or the demodulation reference signal and the fourth signal and/or the fifth signal occupy different time units. In this embodiment of this application, a plurality of signals may share one demodulation reference signal. This helps reduce a quantity of demodulation reference signals, reduce transmission overheads, and cause more resources to be used for transmission of another signal.

In an optional implementation, the method further includes: receiving a demodulation reference signal and power ratio indication information, where the demodulation reference signal and the fourth signal occupy different time units, the demodulation reference signal is used for channel estimation of the fourth signal, the power ratio indication information indicates a power ratio of the demodulation reference signal to the fourth signal, and the power ratio is less than or equal to 1; and demodulating the fourth signal based on a result of the channel estimation and the power ratio. In this embodiment of this application, alternatively, the network apparatus may send demodulation reference signals for different signals respectively. In this case, the network apparatus may send a plurality of demodulation reference signals. If the network apparatus sends a plurality of demodulation reference signals, the plurality of demodulation reference signals may be code division multiplexed. For example, the plurality of demodulation reference signals may be superimposed in time domain and/or frequency domain, but signals corresponding to the plurality of demodulation reference signals may not be superimposed in time domain. In this case, a receive power spectral density of one of the plurality of demodulation reference signals may be actually lower than receive power corresponding to a signal for which channel estimation is performed by using the demodulation reference signal. Therefore, to improve demodulation accuracy, in this embodiment of this application, when demodulating the fourth signal, the terminal apparatus may further refer to the power ratio indication information in addition to the channel estimation result obtained based on the demodulation reference signal corresponding to the fourth signal, so that demodulation of the fourth signal is more accurate.

In an optional implementation, the method further includes: determining a first modulation order and a second modulation order, where the first modulation order is a modulation order included in the modulation and coding scheme corresponding to the fourth signal, and the second modulation order is higher than the first modulation order; and demodulating the fourth signal based on a part of constellation points in a constellation diagram corresponding to the second modulation order.

In an optional implementation, the third signal includes the fourth signal and a fifth signal, and the method further includes: determining a first modulation order and a second modulation order, where the first modulation order is a modulation order included in the modulation and coding scheme corresponding to the fourth signal, the second modulation order is a modulation order included in a modulation and coding scheme corresponding to the fifth signal, and the second modulation order is higher than the first modulation order; demodulating the fourth signal based on a part of constellation points in a constellation diagram corresponding to the second modulation order; and demodulating the fifth signal based on all of the constellation points in the constellation diagram corresponding to the second modulation order.

When the terminal apparatus receives a plurality of signals (for example, the third signal includes the fourth signal and the fifth signal), different signals correspond to a same modulation order or different modulation orders. In this case, when different signals correspond to different modulation orders, the terminal apparatus may demodulate all of the signals based on a higher-order modulation order in the modulation orders. When the network apparatus modulates the fourth signal based on the second modulation order, an information bit carried in a modulation symbol remains unchanged. For example, the first modulation order is QPSK, and each modulation symbol obtained through QPSK modulation may carry two information bits. The second modulation order is 16QAM, and a modulation symbol obtained through 16QAM modulation should have carried four information bits. However, when the network apparatus modulates the fourth signal through 16QAM, each modulation symbol still carries two information bits instead of four information bits. In this case, for the constellation diagram corresponding to the second modulation order, when modulating the fourth signal, the network apparatus may use only a part of constellation points in the constellation diagram, but not all of the constellation points in the constellation diagram (while the network apparatus normally uses all of the constellation points in the constellation diagram when modulating the fifth signal). Therefore, when demodulating the fourth signal, the terminal apparatus also uses a part of the constellation points in the constellation diagram, but not all of the constellation points in the constellation diagram. For example, a Euclidean distance between constellation points used to demodulate the fourth signal may be long, to improve demodulation performance.

In an optional implementation, performing inverse discrete Fourier transform on the second signal to obtain the third signal includes: performing inverse discrete Fourier transform on information of the second signal in each of M time units, to obtain the third signal, where the M time units are time units occupied by the first signal, and M is a positive integer. That the terminal apparatus performs inverse discrete Fourier transform processing may be performing inverse discrete Fourier transform processing for each of the M time units, so that the third signal can include a processing result in each of the M time units.

According to a second aspect, another communication method is provided. The method may be performed by a network apparatus. The network apparatus is, for example, a network device, another device including a function of the network device, a chip system (or a chip), or another functional module. The chip system or the functional module can implement the function of the network device. The chip system or the functional module is, for example, disposed in the network device. Optionally, the network device is an access network device. Optionally, the access network device is, for example, a base station, or another device in an access network. The method includes: performing discrete Fourier transform on a third signal to obtain a second signal, where the second signal includes a frequency-domain modulation symbol, the third signal includes a fourth signal, and the fourth signal includes a time-domain modulation symbol; performing inverse fast Fourier transform on the second signal to obtain a first signal; and sending the first signal.

In an optional implementation, the method further includes: sending first information, where the first information is used to schedule the fourth signal, the first information includes first indication information, and the first indication information indicates a resource position, in a time unit, of a time-domain modulation symbol included in the fourth signal.

In an optional implementation, that the first indication information indicates the resource position, in the time unit, of the time-domain modulation symbol included in the fourth signal includes: The first indication information indicates a start time-domain modulation symbol of the fourth signal in the time unit, and indicates a quantity of time-domain modulation symbols of the fourth signal in the time unit.

In an optional implementation, the first information further includes second indication information, and the second indication information indicates a time domain resource and a frequency domain resource that are occupied by the third signal.

In an optional implementation, the first information further includes third indication information, the third indication information indicates a modulation and coding scheme of the fourth signal, and the first indication information and the third indication information are used to determine a transport block size corresponding to the fourth signal.

In an optional implementation, before performing inverse fast Fourier transform on the second signal, the method further includes: determining at least one candidate control channel from a time-domain modulation symbol included in the third signal, where each candidate control channel includes L control channel elements, each control channel element includes at least one time-domain modulation symbol, and L is a positive integer; and determining the fourth signal from the at least one candidate control channel, where the fourth signal is one of the at least one candidate control channel.

In an optional implementation, determining the at least one candidate control channel from the time-domain modulation symbol included in the third signal includes: determining a start control channel element in the time-domain modulation symbol included in the third signal; and determining the at least one candidate control channel based on the start control channel element and a quantity of candidate control channel detections. That is, the network apparatus may also determine the fourth signal from the third signal in a manner similar to that of a terminal apparatus.

In an optional implementation, the third signal includes the fourth signal and a fifth signal, and the fourth signal and the fifth signal are time division multiplexed in one OFDM symbol.

In an optional implementation, the third signal includes the fourth signal and a fifth signal, the fourth signal is carried on a first channel, and the fifth signal is carried on a second channel.

In an optional implementation, the first channel is a physical downlink control channel, the second channel is a physical downlink shared channel, and the first channel is used to schedule the second channel; the first channel and the second channel each are a physical downlink control channel; or the first channel and the second channel each are a downlink common channel.

In an optional implementation, the third signal includes the fourth signal and a fifth signal, and the method further includes: sending a demodulation reference signal, where the demodulation reference signal is used for channel estimation of the fourth signal and the fifth signal, and/or the demodulation reference signal and the fourth signal and/or the fifth signal occupy different time units.

In an optional implementation, the method further includes: sending a demodulation reference signal and power ratio indication information, where the demodulation reference signal and the fourth signal occupy different time units, the demodulation reference signal is used for channel estimation of the fourth signal, the power ratio indication information indicates a power ratio of the demodulation reference signal to the fourth signal, and the power ratio is less than or equal to 1.

In an optional implementation, the method further includes: determining a first modulation order and a second modulation order, where the first modulation order is a modulation order included in the modulation and coding scheme corresponding to the fourth signal, and the second modulation order is higher than the first modulation order; and performing constellation modulation on the fourth signal based on a part of constellation points in a constellation diagram corresponding to the second modulation order.

In an optional implementation, the third signal includes the fourth signal and the fifth signal, the second modulation order is a modulation order included in a modulation and coding scheme corresponding to the fifth signal, and the method further includes: performing constellation modulation on the fifth signal based on all of the constellation points in the constellation diagram corresponding to the second modulation order.

In an optional implementation, performing discrete Fourier transform on the third signal to obtain the second signal includes: performing discrete Fourier transform on information of the third signal in each of M time units, to obtain the second signal, where the M time units are time units occupied by the first signal, and M is a positive integer.

For technical effects brought by the second aspect or the optional implementations, refer to the descriptions of the technical effects of the first aspect or the corresponding implementations.

According to a third aspect, a communication apparatus is provided. The communication apparatus may be the terminal apparatus according to either of the first aspect and the second aspect. The communication apparatus has a function of the foregoing terminal apparatus. The communication apparatus is, for example, a terminal device, another device including a function of the terminal device, a chip system (or a chip), or another functional module. The chip system or the functional module can implement the function of the terminal device. The chip system or the functional module is, for example, disposed in the terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive a first signal. The processing unit is configured to perform fast Fourier transform on the first signal to obtain a second signal, where the second signal includes a frequency-domain modulation symbol. The processing unit is further configured to perform inverse discrete Fourier transform on the second signal to obtain a third signal, where the third signal includes a time-domain modulation symbol. The processing unit is further configured to obtain a fourth signal from the third signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the terminal apparatus according to either of the first aspect and the second aspect.

According to a fourth aspect, a communication apparatus is provided. The communication apparatus may be the network apparatus according to either of the first aspect and the second aspect. The communication apparatus has a function of the foregoing network apparatus. The communication apparatus is, for example, a network device, another device including a function of the network device, a chip system (or a chip), or another functional module. The chip system or the functional module can implement the function of the network device. The chip system or the functional module is, for example, disposed in the network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the third aspect.

In an optional implementation, the processing unit is configured to perform discrete Fourier transform on a third signal to obtain a second signal, where the second signal includes a frequency-domain modulation symbol, the third signal includes a fourth signal, and the fourth signal includes a time-domain modulation symbol. The processing unit is further configured to perform inverse fast Fourier transform on the second signal to obtain a first signal. The transceiver unit (or a sending unit) is configured to send the first signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the network apparatus according to either of the first aspect and the second aspect.

According to a fifth aspect, a communication apparatus is provided. The communication apparatus may be a terminal device, or may be a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal apparatus in the foregoing aspects.

According to a sixth aspect, a communication apparatus is provided. The communication apparatus may be a network device, or may be a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the network apparatus in the foregoing aspects.

According to a seventh aspect, a communication system is provided, and includes a terminal apparatus and a network apparatus. The terminal apparatus is configured to perform the method performed by the terminal apparatus according to the first aspect or the second aspect, and the network apparatus is configured to perform the method performed by the network apparatus according to the first aspect or the second aspect. For example, the terminal apparatus may be implemented by the communication apparatus according to the third aspect or the fifth aspect, and the network apparatus may be implemented by the communication apparatus according to the fourth aspect or the sixth aspect. Optionally, the communication system may further include another apparatus or device, for example, include an apparatus other than the terminal apparatus and the network apparatus. This is not limited.

According to an eighth aspect, a computer-readable storage medium is provided. The computer-readable storage medium is configured to store a computer program or instructions. When the computer program or the instructions are run, the method performed by the terminal apparatus and/or the network apparatus in the foregoing aspects is implemented.

According to a ninth aspect, a computer program product including instructions is provided. When a computer program or the instructions are run on a computer, the method in the foregoing aspects is implemented.

According to a tenth aspect, a chip system is provided, and includes a processor and an interface. The processor is configured to invoke instructions from the interface and run the instructions, to enable the chip system to implement the method in the foregoing aspects.

### BRIEF DESCRIPTION OF DRAWINGS

FIG. 1A is a diagram of a generation process of a conventional OFDM waveform;
FIG. 1B is a diagram of a generation process of a single-carrier OFDM waveform;
FIG. 2A is a diagram of downlink transmission using a conventional OFDM waveform;
FIG. 2B is a diagram of downlink transmission using a single-carrier OFDM waveform;
FIG. 3 is a diagram of a manner of downlink transmission using single-carrier OFDM;
FIG. 4 is a diagram of an application scenario according to an embodiment of this application;
FIG. 5 is a flowchart of a communication method according to an embodiment of this application;
FIG. 6 is a diagram of an indication manner of first indication information according to an embodiment of this application;
FIG. 7A and FIG. 7B are two diagrams of performing modulation by using a higher-order constellation diagram according to embodiments of this application;
FIG. 8 is a diagram of detecting a PDCCH by a UE according to an embodiment of this application;
FIG. 9 is a diagram of time division multiplexing of a plurality of downlink common channels in one OFDM symbol according to an embodiment of this application;
FIG. 10 is a diagram of time division multiplexing of a PDCCH and a PDSCH in one OFDM symbol according to an embodiment of this application;
FIG. 11 is a diagram of processing processes of two ends: a network device and a UE according to an embodiment of this application;
FIG. 12A and FIG. 12B are diagrams of two implementations of a DMRS according to embodiments of this application;
FIG. 13 is a diagram of an apparatus according to an embodiment of this application; and
FIG. 14 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. In addition, step numbers in embodiments described in this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, objects, machines, and the like, may be widely used in various scenarios, and includes, for example, but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearable, smart transportation, a smart city (smart city), an uncrewed aerial vehicle, a robot, and indoor commercial scenarios (for example, phone screen projection, file sharing, and video transmission from a mobile phone to VR glasses). When used in V2X, the terminal device may also be referred to as a V2X device, for example, an intelligent car (smart car or intelligent car), a digital car (digital car), an unmanned car (unmanned car, driverless car, pilotless car, or automobile), an autonomous car (self-driving car or autonomous car), a battery electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). Alternatively, the terminal device may be a device in D2D communication, for example, an electricity meter or a water meter.

In addition, in embodiments of this application, the terminal device may alternatively be a terminal device in an IoT system. IoT is an important part of future information technology development. A main technical feature of the IoT is to connect articles to a network by using a communication technology, to implement an intelligent network for human-machine interconnection and thing-thing interconnection.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted component, a vehicle-mounted chip, or an on-board unit that is built in the vehicle as one or more components or units. The vehicle may implement a method in this application through the built-in vehicle-mounted module, vehicle-mounted component, vehicle-mounted chip, or on-board unit.

The terminal device may be sometimes referred to as a user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is the UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is the base station. The base station may communicate with the terminal device, or may communicate with the terminal device via the relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), and a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-CP, O-CU-UP), and the RU may also be referred to as an open RU (open RU, O-RU). For ease of description, in embodiments of this application, the CU, the CU-CP, the CU-UP, the DU, and the RU are used as an example for description. In embodiments of this application, any unit in the CU (or the CU-CP and the CU-UP), the DU, and the RU may be implemented by a software module, a hardware module, or a combination of a software module and a hardware module.

Optionally, in embodiments of this application, if the network device has a distributed architecture, for example, the network device includes a CU and a DU, or includes a CU-CP, a CU-UP, and a DU, that the network device sends information to the UE may be specifically that the DU included in the network device sends the information to the UE; and that the network device receives information from the UE may be specifically that the DU included in the network device receives the information from the UE.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is the network device.

The following describes technical features in embodiments of this application.

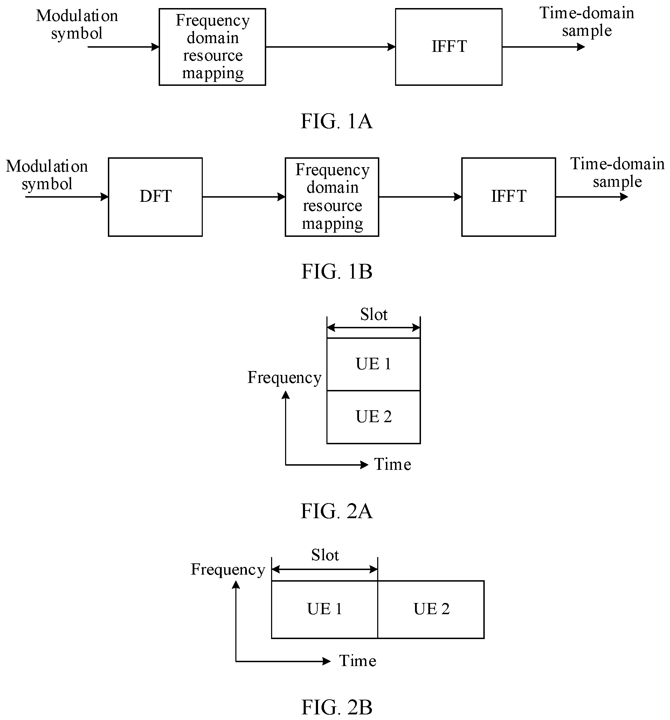

In a 4G or 5G communication system, a DFT-s-OFDM waveform is mainly used for uplink transmission, and is commonly referred to as a single-carrier OFDM waveform. In comparison with a conventional OFDM waveform, for the DFT-s-OFDM waveform, a DFT processing process is added at a signal transmitting end, so that a signal has a lower PAPR, thereby improving power efficiency of a UE. FIG. 1A shows a generation process of a conventional OFDM waveform. FIG. 1B shows a generation process of a DFT-s-OFDM waveform. It can be learned that, for the conventional OFDM waveform, a modulation symbol is mapped to a frequency domain resource, and then inverse fast Fourier transform (inverse fast Fourier transform, IFFT) is performed to transform the modulation symbol to a time domain signal for sending. In comparison with the conventional OFDM waveform, performing a DFT processing process on a modulation symbol is newly added for the DFT-s-OFDM waveform.

A reason why single-carrier OFDM is not used in a downlink is that a base station has a large quantity of antennas and a large quantity of radio frequency channels. Even if the single-carrier OFDM is used, it is still difficult to achieve a low PAPR due to impact of digital precoding, multi-stream transmission, and the like.

However, with the evolution of some technologies, the problem caused by introducing the single-carrier OFDM in the downlink may be alleviated. For example, if the base station supports multi-connection or even full connection, that is, one digital channel may be connected to a plurality of power amplifiers and antennas, in light load and medium load scenarios, most digital channels are shut down to perform low-stream or even single-stream transmission, so that impact of factors such as digital precoding and multi-stream transmission on a PAPR can be weakened. In addition, deployment of a 5G or 6th generation (6th generation, 6G) communication system at a high frequency, for example, deployment in a centimeter wave frequency band, a millimeter wave frequency band, or even a terahertz frequency band, is more conducive to single-carrier OFDM introduction. An antenna architecture of a highfrequency base station mainly depends on analog precoding, and there are a small quantity of digital channels. For example, two, four, or eight digital channels are typical configurations. In comparison with 64, 128, or 256 digital channels in a decimeter wave frequency band, a large quantity of digital channels are reduced, so that impact of factors such as digital precoding and multi-stream transmission on a PAPR can be weakened.

Therefore, how to introduce single-carrier OFDM into downlink transmission is an urgent problem to be resolved. The following provides two manners of introducing single-carrier OFDM in a downlink in embodiments of this application.

In a first manner, an uplink single-carrier OFDM solution is directly applied to the downlink. A difference between an uplink and the downlink is that in uplink transmission, a single UE sends a signal to a base station, while in downlink transmission, the base station may simultaneously send signals to a plurality of UEs. Therefore, if uplink single-carrier OFDM is directly applied, during downlink transmission, the base station may send signals of different UEs in a time division manner, that is, a plurality of UEs perform downlink transmission based on time division multiplexing. For example, FIG. 2A is a diagram of downlink transmission using a conventional OFDM waveform, and FIG. 2B is a diagram of downlink transmission using single-carrier OFDM. It can be learned that, in FIG. 2A, signals of a UE 1 and a UE 2 are simultaneously transmitted, while in FIG. 2B, signals of the UE 1 and the UE 2 are transmitted in a time division manner. This increases a signal transmission delay. In addition, in the time-division transmission manner shown in FIG. 2B, a time proportion of downlink transmission of the base station is further increased, and power consumption of the base station is increased.

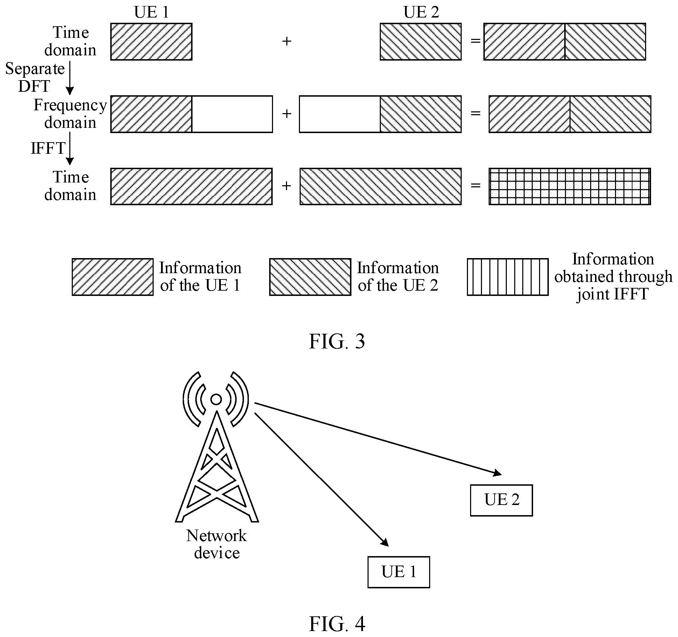

In a second manner, for signals of different UEs, a base station may separately perform DFT processing, perform IFFT together on signals that are of the UEs and on which DFT processing is performed, to transform the signals to time domain signals for sending. For this, refer to FIG. 3. In the second manner, after single-carrier OFDM is introduced, simultaneous transmission may also be implemented. This helps reduce a transmission delay. However, in the second manner, the base station separately performs DFT processing on signals of different UEs. This may cause signals that are of the UEs and on which IFFT is performed to be superimposed with each other, resulting in a PAPR increase. This is contrary to an original intention of introducing the single-carrier OFDM.

In view of this, in embodiments of this application, single-carrier OFDM may be used in downlink transmission, thereby reducing a PAPR of the downlink transmission, and improving performance or power efficiency of the downlink transmission. In embodiments of this application, it is considered that the downlink transmission may be that a network device simultaneously sends signals to a plurality of users, or the network device sends signals on a plurality of channels. Therefore, in embodiments of this application, simultaneous transmission of the signals of the plurality of users or the plurality of channels may be further implemented. When the simultaneous transmission of the signals of the plurality of users or the plurality of channels is implemented, in embodiments of this application, signals of different users or different channels do not need to be scheduled in a time division manner, thereby reducing a signal transmission delay. In addition, a signal transmitting end (for example, the network device) may perform discrete Fourier transform on the signals of the plurality of users or the plurality of channels together, instead of performing discrete Fourier transform on the signals of different users or different channels separately. Correspondingly, a signal receiving end (for example, a UE) may perform inverse discrete Fourier transform on received signals together. If the signal transmitting end performs discrete Fourier transform on the signals of different users or different channels separately, after inverse fast Fourier transform is performed on the signals on which discrete Fourier transform is performed, the signals of different users or different channels may be superimposed, causing a PAPR increase. However, in embodiments of this application, the signal transmitting end performs discrete Fourier transform on the signals of the plurality of users or the plurality of channels together. In this case, after inverse fast Fourier transform is performed on the signals on which discrete Fourier transform is performed, a probability of mutual superimposition of signals of different users or different channels is reduced, thereby further reducing the PAPR.

The technical solutions provided in embodiments of this application may be applied to a 4G system, for example, a long term evolution (long term evolution, LTE) system; may be applied to a 5G system, for example, a new radio (new radio, NR) system; or may be applied to a next-generation mobile communication system or another similar communication system, for example, a 6G system. This is not specifically limited. In addition, the technical solutions provided in embodiments of this application may alternatively be applied to a D2D scenario, for example, an NR-D2D scenario; or may be applied to a V2X scenario, for example, an NR-V2X scenario. For example, embodiments of this application may be applied to fields such as factory manufacturing, whole-house intelligence, intelligent driving, assisted driving, intelligent connected vehicles, or indoor commercial scenarios.

FIG. 4 is a diagram of an application scenario according to an embodiment of this application. FIG. 4 includes a network device, a UE 1, and a UE 2. The network device may send downlink signals to the two UEs through single-carrier OFDM, or the network device may send a plurality of channels to either of the two UEs through single-carrier OFDM. In FIG. 4, the two UEs are used as an example, and a quantity of UEs is not limited actually.

The following describes the method provided in embodiments of this application with reference to the accompanying drawings. In embodiments of this application, a time unit is, for example, a frame (frame), a subframe (subframe), a slot (slot), a mini-slot (mini-slot), an OFDM symbol group, or an OFDM symbol. In the following descriptions, an example in which the time unit is the OFDM symbol is mainly used. In other words, the "OFDM symbol" described below may be replaced with the "time unit". A frequency unit is, for example, a subcarrier (subcarrier) or a subchannel (subchannel). In embodiments of this application, a "time-domain modulation symbol", a "frequency-domain modulation symbol", and the like are included in a signal, for example, each are a signal or a component of the signal. The "OFDM symbol" is a time unit, and is a different concept. In embodiments of this application, a downlink common channel is, for example, a broadcast channel oriented to all UEs in a cell, and includes, for example, one or more of the following: a synchronization signal/physical broadcast channel block (synchronization system/physical broadcast channel block, SS/PBCH block), a physical broadcast channel (physical broadcast channel, PBCH), a physical downlink control channel (physical downlink control channel, PDCCH) used to schedule a system message, a paging message, or a random access channel (random access channel, RACH) response message, or a physical downlink shared channel (physical downlink shared channel, PDSCH) used to carry a paging message or an RACH response message. The SS/PBCH block may also be referred to as a synchronization signal block (synchronization signal block, SSB) for short.

Embodiments of this specification may be applied to a network architecture shown in FIG. 4. For example, the UE described in embodiments of this specification may be the UE 1 or the UE 2 in FIG. 4, and the network device described in embodiments of this specification may be the network device in FIG. 4. In the accompanying drawings corresponding to embodiments of this specification, all steps represented by dashed lines are optional steps.

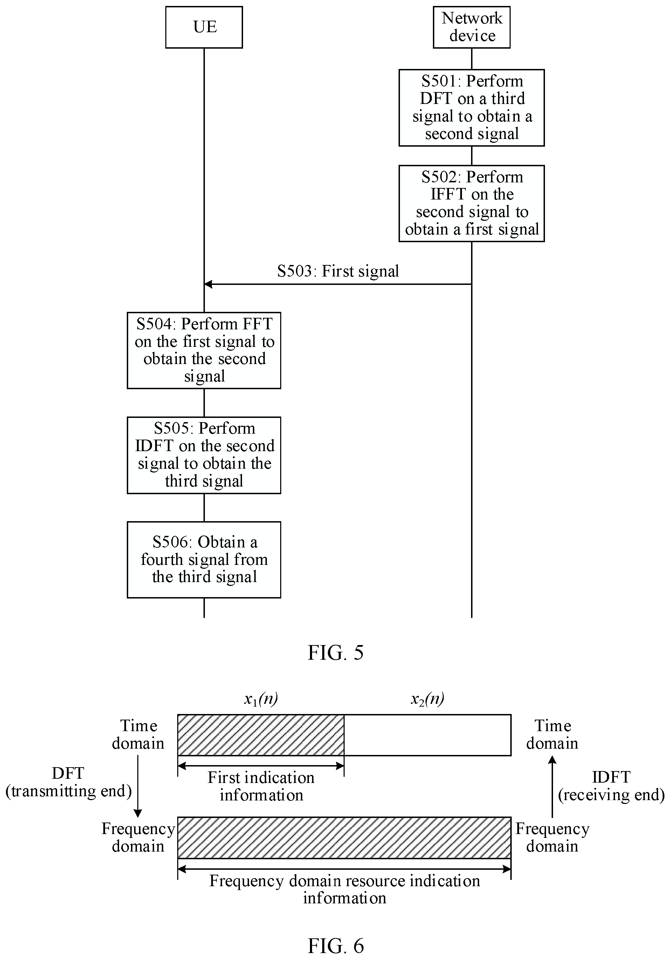

An embodiment of this application provides a communication method. FIG. 5 is a flowchart of the method.

S501: A network device performs DFT on a third signal to obtain a second signal.

The third signal may include a time-domain modulation symbol, and the second signal may include a frequency-domain modulation symbol. For example, the third signal includes a fourth signal, and the fourth signal includes one or more time-domain modulation symbols. Optionally, the third signal may further include another signal in addition to the fourth signal. For example, the third signal includes the fourth signal and the fifth signal (in this specification, an example in which the third signal includes two signals is mainly used, but actually the third signal may further include more signals, and processing manners are similar). The fifth signal may also include one or more time-domain modulation symbols. A quantity of time-domain modulation symbols included in the fourth signal may be equal to or not equal to a quantity of time-domain modulation symbols included in the fifth signal. Optionally, if the third signal includes a plurality of signals, the third signal may be a signal obtained by connecting the plurality of signals in series. For example, the third signal may be a signal obtained by connecting, in series, time-domain modulation symbols included in the plurality of signals.

The fourth signal and the fifth signal may be signals whose target receiving ends are different UEs. For example, the target receiving end of the fourth signal is a UE, and the target receiving end of the fifth signal is another UE. In this case, the fourth signal and the fifth signal may be signals of a same type, for example, each are a PDCCH, a PDSCH, or a downlink common channel. Alternatively, the fourth signal and the fifth signal may be signals of different types. For example, the fourth signal is a PDCCH, and the fifth signal is a PDSCH; or the fourth signal is a PDSCH, and the fifth signal is a downlink common channel.

Alternatively, the fourth signal and the fifth signal may be signals whose target receiving ends are a same UE. In this case, the fourth signal and the fifth signal may be signals of different types, or may be signals of a same type.

In other words, in this embodiment of this application, DFT may be performed on signals of a plurality of users or a plurality of channels together, instead of being performed on signals of different users or different channels separately. If the network device performs DFT on the signals of different users or different channels separately, after IFFT is performed on the signals on which DFT is performed, the signals of different users or different channels may be superimposed, causing a PAPR increase. However, in this embodiment of this application, the network device performs DFT on the signals of the plurality of users or the plurality of channels together. In this case, after IFFT (this step is described in S502) is performed on the signals on which DFT is performed, a probability of mutual superimposition of signals of different users or different channels can be reduced, thereby further reducing a PAPR.

The third signal may occupy M OFDM symbols. That the network device performs DFT on the third signal may be performing DFT on information of the third signal on each OFDM symbol. For example, that the network device performs DFT on the third signal to obtain the second signal may include: The network device performs DFT on the information of the third signal on each of the M OFDM symbols, to obtain the second signal. The second signal may correspond to information of the third signal on all of the M OFDM symbols. For example, the third signal occupies an OFDM symbol 1 and an OFDM symbol 2, information that is of the third signal and that is carried on the OFDM symbol 1 is, for example, referred to as information 1, and information that is of the third signal and that is carried on the OFDM symbol 2 is, for example, referred to as information 2. In this case, the network device may perform DFT on the information 1 to obtain information a, and perform DFT on the information 2 to obtain information b. The second signal may include the information a and the information b. The following uses one of the M OFDM symbols as an example for description.

For example, the second signal satisfies the following relationship: $X \left(k\right) = \frac{1}{\sqrt{P}} {\sum }_{n = 0}^{P - 1} x \left(n\right) ∗ {e}^{- j ∗ \frac{2 πkn}{P}} , k = 0 , 1 , … , P - 1$

*X*(*k*) represents the second signal, where k may represent an index of a frequency-domain modulation symbol obtained through DFT transform or an index of a subcarrier occupied by the frequency-domain modulation symbol. *x*(*n*) represents the third signal, where n represents an index of a time-domain modulation symbol in an OFDM symbol. For example, *x*(1) represents a 1^{st} time-domain modulation symbol in the OFDM symbol, and *x*(2) represents a 2^{nd} time-domain modulation symbol in the OFDM symbol. For example, the third signal includes the fourth signal, and the fourth signal may be represented by *x*₁(*n*). For another example, the third signal includes the fourth signal and the fifth signal, the fourth signal may be represented by *x*₁(*n*), and the fifth signal may be represented by *x*₂(*n*). P represents a quantity of time-domain modulation symbols included in the third signal. For example, P may be an integer multiple of 2, an integer multiple of 3, or an integer multiple of 5, to reduce DFT complexity. If the third signal includes only the fourth signal, but a quantity of time-domain modulation symbols that are of the fourth signal and that are included in the OFDM symbol is less than a DFT length P, the third signal needs to be continuously padded with zeros, to pad a length of the third signal to the length P, and then DFT processing is performed, according to Formula 1, on a third signal obtained through zero padding. In this case, it may be considered that the fifth signal is an all-zero signal.

Optionally, before S501, the network device may further perform corresponding processing on original information to obtain the third signal. If the third signal includes a plurality of signals, each of the plurality of signals may correspond to corresponding original information. The network device may separately process the original information, and the third signal may include various pieces of processed original information. For example, if the third signal includes the fourth signal and the fifth signal, the fourth signal may correspond to first original information, and the fifth signal may correspond to second original information. The network device may process the first original information to obtain, for example, a signal A, and process the second original information to obtain, for example, a signal B. The third signal may include the signal A and the signal B.

An example in which the network device processes the first original information is used for description. A process in which the network device processes other original information is similar to a process in which the network device processes the first original information. For example, the network device adds a cyclic redundancy check (cyclic redundancy check, CRC) to the first original information, where the CRC is added for a target receiving end of the first original information to check correctness of decoded first original information. Optionally, if the first original information is a data channel, for example, a PDSCH, the CRC may be long, for example, 24 bits (bits); or if the first original information is a control channel, for example, a PDCCH, the CRC may be short, for example, 16 bits. Alternatively, in consideration of a problem like a false alarm of the control channel, a long CRC, for example, 24 bits, is sometimes added to the control channel.

Optionally, if the first original information is the control channel, a mask may be further added to the CRC, and the mask is generally used by the target receiving end of the first original information to perform an exclusive OR operation on the mask and the CRC. The mask may be related to an identifier of the target receiving end of the first original information, and the identifier is, for example, a cell radio network temporary identifier (cell radio network temporary identifier, C-RNTI) of the target receiving end. Alternatively, the mask may be related to an identifier of a terminal group to which the target receiving end of the first original information belongs. The terminal group is, for example, a group used to implement a function. For example, UEs included in the terminal group may be used to implement a function in collaboration, or each UE included in the terminal group can implement a function. The function is, for example, a power control function. The identifier of the terminal group is, for example, an RNTI corresponding to the terminal group. Alternatively, the mask may be related to a broadcast identifier. In this case, each UE in a cell may use the broadcast identifier. The broadcast identifier is, for example, an RNTI used for transmission of a system broadcast message.

After the CRC is added to the first original information, channel encoding may be performed, based on a specific mother code rate (for example, 1/3, where a corresponding input is f bits, and an output is 3f bits), on the first original information to which the CRC is added. A used channel encoding algorithm may include low-density parity-check code (low-density parity-check code, LDPC) encoding, convolutional encoding, polar encoding, or the like. Channel encoding is performed to obtain encoded bits, and rate matching may be performed on the encoded bits based on a final encoding rate, to obtain a final output codeword. If the final encoding rate is less than the mother code rate, the encoded bits may be repeated; or if the final encoding rate is greater than the mother code rate, the encoded bits may be punctured.

For the output codeword, the network device may further perform constellation modulation to obtain a time-domain modulation symbol. A constellation modulation scheme includes, for example, quadrature phase shift keying (quadrature phase shift keying, QPSK), 16 quadrature amplitude modulation (quadrature amplitude modulation, QAM), or 64QAM. A time-domain modulation symbol obtained based on the first original information may be the fourth signal. In addition, a time-domain modulation symbol obtained based on the second original information may be the fifth signal.

After constellation modulation is performed, the network device obtains the third signal. In this case, the network device may perform DFT on the third signal in the foregoing manner, to obtain the second signal.

Optionally, the network device may map the second signal to subcarriers corresponding to the M OFDM symbols. Generally, in frequency domain, resources are allocated based on a granularity of a resource block (resource block, RB), and one RB may include 12 subcarriers. Therefore, the foregoing described quantity P of time-domain modulation symbols included in the third signal is generally an integer multiple of 12, to ensure that the frequency-domain modulation symbol included in the second signal is mapped to an integer quantity of RBs.

After mapping, for each of the M OFDM symbols, the network device may perform digital precoding on each of a plurality of antenna ports used to send the second signal on the OFDM symbol, to map the second signal to the plurality of antenna ports corresponding to the OFDM symbol. For example, a digital precoding process satisfies the following relationship: $\left(\begin{matrix}{S}^{1} \left(k\right) \\ {S}^{2} \left(k\right)\end{matrix}\right) = \left(\begin{matrix}W 1 \\ W 2\end{matrix}\right) ∗ X \left(k\right)$

In Formula 2, it is assumed that one OFDM symbol corresponds to two antenna ports used to send the second signal, and it is assumed that the two antenna ports send one stream of data. $\left(\begin{matrix}W 1 \\ W 2\end{matrix}\right)$ is a precoding matrix, and *X*(*k*) represents the second signal. *Sⁱ*(*k*) represents a signal of the second signal on an i^{th} antenna port on one OFDM symbol. Theoretically, digital precoding may be different for all subcarriers. However, generally, in consideration of small frequency selectivity of a channel, digital precoding is generally performed at a granularity of several RBs. Further, to be more friendly to a PAPR of single-carrier OFDM, wideband precoding may be used, that is, precoding matrices of all subcarriers are the same. However, in such processing, a part of beam gains may be lost to reduce the PAPR. Optionally, the digital precoding process may alternatively be performed for each OFDM symbol.

The antenna port may be a logical concept, and is not equivalent to a physical antenna. Each antenna port may be a single digital channel, or may be formed by virtualization of a plurality of digital channels. Subsequently, a signal of each antenna port may be further mapped to a physical antenna element by using a process like analog precoding.

S502: The network device performs IFFT on the second signal to obtain a first signal.

For example, the network device may perform IFFT on a digitally precoded signal on each of a plurality of antenna ports used to send the second signal, to obtain the first signal. For each of the M OFDM symbols, the network device may perform IFFT on a digitally precoded signal on each of a plurality of antenna ports used to send the second signal. The first signal may correspond to the M OFDM symbols, and correspond to the plurality of antenna ports.

Optionally, the first signal may satisfy the following relationship: ${s}^{i} \left(t\right) = \frac{1}{\sqrt{N}} {\sum }_{k = 0}^{N - 1} {S}^{i} \left(k\right) ∗ {e}^{j ∗ \frac{2 πkt}{N}} , t = 0 , 1 , … , N - 1$

*sⁱ*(*t*) is information included in the first signal, and *sⁱ*(*t*) represents a time-domain sample obtained by performing IFFT on a signal on the i^{th} antenna port. In comparison with the foregoing DFT processing, N is generally greater than P, that is, oversampling is performed in an IFFT processing process. Therefore, zero padding needs to be performed in frequency domain on *Sⁱ*(*k*) whose length is P, to obtain a length of N. Therefore, after oversampling is performed, one of the M OFDM symbols may correspond to N time-domain samples.

S503: The network device sends the first signal. Correspondingly, the UE receives the first signal.

The network device may directly send the first signal. For example, the network device may perform operations such as digital-to-analog conversion and up-conversion on the first signal obtained in S502, and finally send the first signal over an air interface. Alternatively, the network device may add a cyclic prefix (cyclic prefix, CP) to the first signal. For example, the network device may add a CP before *sⁱ*(*t*) corresponding to each of the M OFDM symbols, then perform subsequent operations such as digital-to-analog conversion and up-conversion, and finally send, over an air interface, the first signal to which the CP is added.

A principle of fast Fourier transform (fast Fourier transform, FFT) is the same as that of DFT, but some fast transform algorithms are used during implementation. In this embodiment of this application, DFT and FFT are not distinguished, and similarly, inverse discrete Fourier transform (inverse discrete Fourier transform, IDFT) and IFFT are not distinguished. For example, in this embodiment of this application, DFT may be replaced with FFT, or FFT may be replaced with DFT; and IDFT may be replaced with IFFT, or IFFT may be replaced with IDFT.

S504: The UE performs FFT on the first signal to obtain the second signal.

For S504, the UE may have different implementations.

In an optional implementation, the UE may receive a complete first signal. For example, the first signal includes *sⁱ*(*t*), where *sⁱ*(*t*) represents a signal on an i^{th} antenna port on an OFDM symbol. In this manner, the UE may perform FFT on the first signal to obtain the second signal. For example, if the UE receives the first signal to which the CP is added, the UE may remove the CP to obtain the first signal, and the UE may perform FFT on the first signal to obtain the second signal. It is considered that the CP added to the first signal is generally added at a granularity of an OFDM symbol. Therefore, to reduce impact of a multipath channel, receiving based on all OFDM symbols occupied by the first signal (that is, receiving the complete first signal) is a good receiving manner.

In another optional implementation, the UE may receive a part of the first signal, or receive a part of information in the first signal, but not receive the complete first signal. For example, for one of the M OFDM symbols occupied by the first signal, the UE receives only information of the first signal carried on a part of time-domain samples in the OFDM symbol, and does not receive information of the first signal carried on a remaining time-domain sample in the OFDM symbol. For example, the part of time-domain samples are time-domain samples corresponding to the fourth signal, and the remaining time-domain sample is a time-domain sample corresponding to the fifth signal. Optionally, the UE may receive a signal that uses the UE as a target receiving end and that is in the first signal, for example, the fourth signal, and does not receive a signal that uses another UE as a target receiving end and that is in the first signal, for example, the fifth signal. Optionally, the UE may determine, based on first indication information, the signal that uses the UE as the target receiving end and that is in the first signal, to receive the signal. The first indication information is described below.

If the UE receives only the part of information in the first signal, for example, a time-domain sample occupied by the fourth signal, the UE may perform FFT on the received information, and an obtained signal is referred to as a signal A, where the signal A may include a frequency-domain modulation symbol. Alternatively, if the UE receives only the part of information in the first signal, for example, a time-domain sample occupied by the fourth signal, and a signal transmitting end (for example, the network device) does not perform oversampling when performing IFFT on the second signal in S502, or performs oversampling but the UE filters out only a bandwidth of an original non-oversampled part when performing filtering in frequency domain, the UE may directly obtain a signal B based on the received information, where the signal B includes a time-domain modulation symbol. It is equivalent to that the UE does not need to perform processing processes such as FFT and IDFT.

Optionally, after receiving the first signal (or the part of information in the first signal), the UE may further perform processing such as channel estimation and equalization on the received information (the first signal or the part of information in the first signal). For example, the first signal (or the part of information in the first signal) received by the UE carries channel distortion information. The UE may perform channel estimation based on a demodulation reference signal (demodulation reference signal, DMRS), and then perform equalization the received information by using a channel estimation result, to obtain a frequency domain signal from which channel distortion impact is eliminated. The foregoing uses frequency-domain channel estimation and equalization as an example. Actually, the UE may use a processing manner like time-domain channel estimation and equalization or time-frequency joint channel estimation and equalization. Manners such as channel estimation and equalization used by the UE are not limited in this embodiment of this application.

A frequency domain position of the second signal is in a first bandwidth, and the second signal may occupy M OFDM symbols in time domain. A frequency domain unit included in the first bandwidth is, for example, a subcarrier or a resource block (resource block, RB). In other words, the first bandwidth may include at least one subcarrier or at least one RB. The second signal is a frequency domain signal. For example, the second signal includes one or more frequency-domain modulation symbols. The second signal may correspond to *Sⁱ*(*k*) in S501. For example, *Sⁱ*(*k*) represents a signal of the second signal on an i^{th} antenna port on one OFDM symbol, where k may represent an index of a frequency-domain modulation symbol in the first bandwidth or an index of a subcarrier occupied by the frequency-domain modulation symbol.

The first bandwidth may be filtered out from an entire system bandwidth (for example, a carrier bandwidth or a bandwidth part (bandwidth part, BWP)) through a filter of the UE, or a subcarrier corresponding to the first bandwidth may be determined from all subcarriers of the entire system bandwidth based on a subcarrier orthogonality characteristic of OFDM. A specific implementation is not limited in this embodiment of this application.

S505: The UE performs IDFT on the second signal to obtain the third signal.

The second signal occupies M OFDM symbols. That the UE performs IDFT on the second signal may be specifically performing IDFT on information of the second signal on each of the M OFDM symbols, and the third signal may include IDFT results on the M OFDM symbols. A quantity of points of the IDFT may be related to a quantity of frequency domain units included in the first bandwidth. For example, the quantity of points of the IDFT is equal to the quantity of frequency domain units included in the first bandwidth. For example, if the first bandwidth includes 48 subcarriers, the quantity of points of the IDFT may be 48.

S506: The UE obtains the fourth signal from the third signal.

For example, if the third signal includes only the fourth signal but does not include another signal, and a quantity of time-domain modulation signals included in the fourth signal is equal to an IDFT length, S506 may not be performed. Alternatively, the third signal includes only the fourth signal but does not include another signal, and a quantity of time-domain modulation signals included in the fourth signal is less than an IDFT length. In this case, it is equivalent to that the network device performs zero padding on the fourth signal to reach the IDFT length, and time-domain modulation symbols obtained through zero padding may be considered as the third signal. In this case, the UE may obtain the fourth signal from the third signal, that is, obtain the original fourth signal before zero padding. Alternatively, in addition to the fourth signal, the third signal further includes another signal, for example, further includes the fifth signal (for example, the fourth signal is represented by *x*₁(*n*), the fifth signal is represented by *x*₂(*n*), and the third signal includes *x*₁(*n*) *and x*₂(*n*) that are connected in series). In this case, the UE may obtain the fourth signal from the third signal. For descriptions of content such as the fourth signal and the fifth signal, refer to the foregoing descriptions.

For example, the third signal includes one or more time-domain modulation symbols. The fourth signal includes at least one time-domain modulation symbol. If the third signal further includes the fifth signal, the fifth signal may also include at least one time-domain modulation symbol. A quantity of time-domain modulation symbols included in the fourth signal is equal to or not equal to a quantity of time-domain modulation symbols included in the fifth signal. The UE obtains the fourth signal from the third signal, that is, the UE needs to receive or intercept, from the third signal, the time-domain modulation symbol that belongs to the fourth signal. A manner in which the UE obtains the fourth signal from the third signal is related to a type of the fourth signal. The following uses examples for description.
1. The fourth signal is a PDSCH, or the fourth signal is included in a PDSCH.

In this case, the UE may obtain the fourth signal from the third signal based on the first indication information. The first indication information may indicate a resource position, in one OFDM symbol, of the time-domain modulation symbol included in the fourth signal. It is equivalent to that the UE may determine a resource position of the fourth signal in the third signal based on the first indication information, so that the fourth signal can be determined from the third signal.

Optionally, the first indication information indicates the resource position, in the OFDM symbol, of the time-domain modulation symbol included in the fourth signal. For example, in an indication manner, the first indication information may indicate a start time-domain modulation symbol of the fourth signal in the OFDM symbol, and indicate a quantity of time-domain modulation symbols that are included in the OFDM symbol and that are of the fourth signal. Alternatively, the first indication information may indicate a start time-domain modulation symbol of the fourth signal in the OFDM symbol, and a quantity of time-domain modulation symbols included in the OFDM symbol may be preconfigured. Alternatively, in another indication manner, the first indication information may indicate an end time-domain modulation symbol of the fourth signal in the OFDM symbol, and indicate a quantity of time-domain modulation symbols that are included in the OFDM symbol and that are of the fourth signal. Alternatively, in still another indication manner, the first indication information may indicate a start time-domain modulation symbol of the fourth signal in the OFDM symbol, and indicate an end time-domain modulation symbol of the fourth signal in the OFDM symbol. The fourth signal may occupy one OFDM symbol, or may occupy a plurality of OFDM symbols. If the fourth signal occupies the plurality of OFDM symbols, the first indication information may indicate a resource position, in each OFDM symbol, of the time-domain modulation symbol included in the fourth signal. Alternatively, if resource positions of the fourth signal in the OFDM symbols occupied by the fourth signal are the same, the first indication information only needs to indicate a resource position, in one OFDM symbol, of the time-domain modulation symbol included in the fourth signal. An indication range of the first indication information in frequency domain may be a range of a quantity of points corresponding to DFT/IDFT, that is, the indication range may be a range of a quantity of subcarriers corresponding to the RB included in the first bandwidth; or the indication range may be a range corresponding to bandwidths that can be allocated from an entire carrier or a BWP. For example, if the carrier or the BWP includes 100 RBs, the indication range may be in a range of M*ₘₐₓ*=100×12=1200.

For example, FIG. 6 is a diagram of an indication manner of first indication information. For example, the quantity of points of DFT/IDFT is 48, that is, the third signal may include 48 time-domain modulation symbols in one OFDM symbol. In this case, the first indication information may indicate a segment of consecutive time-domain modulation symbols in the 48 time-domain modulation symbols, and the segment of consecutive time-domain modulation symbols is the fourth signal. For example, in FIG. 6, the first indication information indicates first 24 time-domain modulation symbols in the 48 time-domain modulation symbols, and the 24 time-domain modulation symbols are the fourth signal (for example, *x*₁(*n*)).

The first indication information may be from the network device. For example, before the UE receives the first signal, or before the network device sends the first signal, the network device may send first information to the UE, where the first information may be used to schedule the fourth signal, and the first indication information may be included in the first information. For example, the first information is included in a PDCCH. For example, the first information is downlink control information (downlink control information, DCI). Alternatively, the first information may be included in radio resource control (radio resource control, RRC) signaling. Alternatively, the first information may be included in signaling of another protocol layer, for example, a media access control (media access control, MAC) control element (control element, CE). This is not limited.

Optionally, in addition to the first indication information, the first information may further include second indication information, and the second indication information may indicate a time domain resource and/or a frequency domain resource that are/is occupied by the third signal. For example, the second indication information includes frequency domain resource indication information and/or time domain resource indication information, the frequency domain resource indication information may indicate the frequency domain resource occupied by the third signal, and the time domain resource indication information may indicate the time domain resource occupied by the third signal. An indication granularity of the frequency domain resource indication information may be an RB, an RB group, or the like. For example, the frequency domain resource indication information may indicate a start RB of the third signal and a quantity of RBs occupied by the third signal. An indication granularity of the time domain resource indication information is, for example, an OFDM symbol. For example, the time domain resource indication information may indicate a start OFDM symbol of the third signal and a quantity of OFDM symbols occupied by the third signal. It is equivalent to that in this embodiment of this application, in addition to indicating a time domain position and a frequency domain position of the third signal, the network device further additionally indicates a position of the fourth signal in the third signal, so that the UE can obtain the fourth signal from the third signal.

Optionally, when the fourth signal is the PDSCH, after receiving or intercepting the fourth signal, the UE may further process the fourth signal, for example, perform processing such as constellation demodulation, decoding, and a CRC check, to obtain original information (for example, referred to as the first original information) corresponding to the fourth signal. The following describes a processing process.

### (1) Demodulation

The UE first determines a modulation order. For example, the modulation order is QPSK or 16QAM. Optionally, the UE may determine the modulation order based on an indication of the network device. For example, the first information described above includes third indication information, the third indication information may indicate a modulation and coding scheme (modulation and coding scheme, MCS) corresponding to the fourth signal, and the modulation and coding scheme includes, for example, a first modulation order. In this case, the fourth signal corresponds to the first modulation order. The UE demodulates the fourth signal based on all constellation points in a constellation diagram corresponding to the first modulation order, to obtain demodulated bit information.

Alternatively, an embodiment of this application provides another demodulation manner. In this demodulation manner, a modulation manner is correspondingly improved. For example, when modulating a sent signal, the network device may perform order increasing. Specifically, when the network device sends a plurality of signals (for example, the third signal includes the fourth signal and the fifth signal), different signals correspond to a same modulation order or different modulation orders. The order increasing is, for example, that when different signals correspond to different modulation orders, the network device may modulate all of the signals based on a higher-order modulation order in the modulation orders. For example, the third signal includes the fourth signal and the fifth signal. The network device determines that a modulation order included in the MCS corresponding to the fourth signal is the first modulation order, and a modulation order included in an MCS corresponding to the fifth signal is a second modulation order. The second modulation order is higher than the first modulation order. In this case, the network device may modulate the fifth signal based on the second modulation order, and modulate the fourth signal also based on the second modulation order.

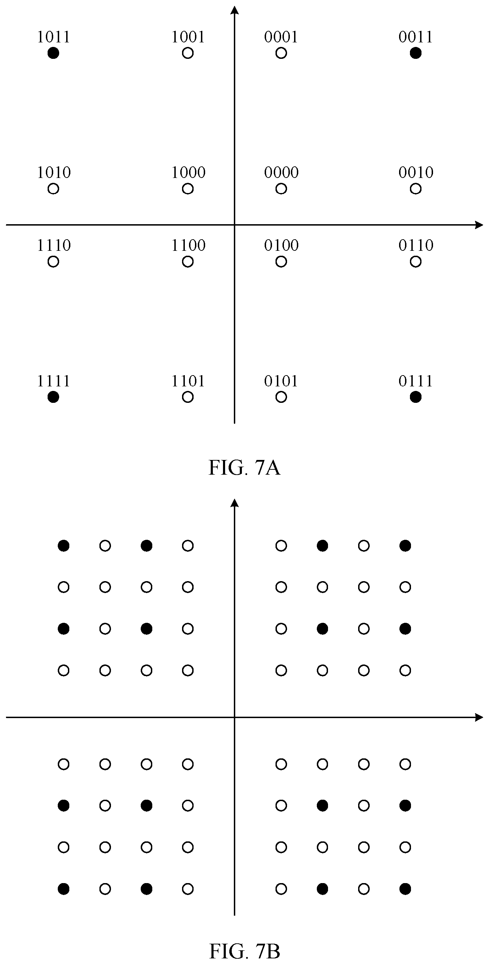

When the network device modulates the fourth signal based on the second modulation order, an information bit carried in a modulation symbol remains unchanged. For example, the first modulation order is QPSK, and each modulation symbol obtained through QPSK modulation may carry two information bits. The second modulation order is 16QAM, and a modulation symbol obtained through 16QAM modulation should have carried four information bits. However, when the network device modulates the fourth signal through 16QAM, each modulation symbol still carries two information bits instead of four information bits. In this case, for a constellation diagram corresponding to the second modulation order, when modulating the fourth signal, the network device may use only a part of constellation points in the constellation diagram, but not all of the constellation points in the constellation diagram (while the network device normally uses all of the constellation points in the constellation diagram when modulating the fifth signal). In this case, in this embodiment of this application, when modulating the fourth signal by using the second modulation order, the network device may modulate the fourth signal by using R constellation points in the constellation diagram corresponding to the second modulation order, where R is less than a quantity of all of the constellation points in the constellation diagram, and R is a positive integer. Optionally, a Euclidean distance between any two of the R constellation points may be greater than or equal to a first threshold, and the first threshold is, for example, a Euclidean distance between all constellation points in a normal constellation diagram. For example, the first modulation order is QPSK, and the second modulation order is 16QAM. In this case, R=4. FIG. 7A is a constellation diagram corresponding to 16QAM. The four constellation points may be four points (that is, black points in FIG. 7A) at four corners in FIG. 7A. For another example, the first modulation order is 16QAM, and the second modulation order is 64QAM. In this case, R=16. FIG. 7B is a constellation diagram corresponding to 64QAM. The 16 constellation points may be black points in FIG. 7B.

Because the network device performs order increasing during modulation, correspondingly, the UE may also perform corresponding order increasing during demodulation. For example, one UE is a target receiving end of the fourth signal, and the UE determines, based on the third indication information described above, the MCS corresponding to the fourth signal. The modulation order included in the MCS is the first modulation order, and the first modulation order is a modulation order corresponding to the fourth signal. In addition, the UE may further determine the second modulation order, where the second modulation order is higher than the first modulation order. In this case, the UE may demodulate the fourth signal based on the second modulation order, instead of demodulating the fourth signal based on the first modulation order.

Similar to a modulation process, the UE may demodulate the fourth signal based on the R constellation points in the constellation diagram corresponding to the second modulation order. Optionally, the UE and the network device may determine the R constellation points by using a same rule, or constellation points that the R constellation points are may be indicated by the network device, or may be predefined in a protocol.

The UE determines the second modulation order. For example, in a determining manner, the UE determines the second modulation order based on an indication of the network device. For example, the second modulation order is a modulation order corresponding to the fifth signal. If the UE is also a target receiving end of the fifth signal, the UE may receive, from the network device, information used to schedule the fifth signal, for example, referred to as second information, where the second information may indicate the second modulation order. If the UE determines that the second modulation order is higher than the first modulation order, the UE may demodulate the fourth signal based on the R constellation points in the constellation diagram corresponding to the second modulation order. In addition, the UE may also demodulate the fifth signal based on all of the constellation points in the constellation diagram corresponding to the second modulation order.

Alternatively, if the UE is not a target receiving end of the fifth signal, the UE may not receive second information from the network device. In this case, the network device may indicate the second modulation order to the UE. For example, the first information sent by the network device to the UE may indicate the second modulation order, so that the UE can demodulate the fourth signal based on the R constellation points in the constellation diagram corresponding to the second modulation order.

In this embodiment of this application, order increasing is performed, so that the UE can demodulate the fourth signal by using constellation points between which there is a long Euclidean distance in the constellation diagram, to improve demodulation performance of the fourth signal. In addition, because the modulation orders of the two signals are the same, PAPRs of the signals are not significantly affected. In other words, in this embodiment of this application, the demodulation performance is improved without affecting the PAPRs.

### (2) Decoding

The UE decodes the demodulated bit information. The UE may determine an encoding rate of the fourth signal based on an indication of the network device. For example, the first information described above may indicate the encoding rate. For example, the third indication information included in the first information may indicate the MCS corresponding to the fourth signal. In addition to the first modulation order, the MCS further includes the encoding rate corresponding to the fourth signal. In addition, the UE may further determine a transport block size (transport block size, TBS) corresponding to the fourth signal. Optionally, the UE may determine, based on the first indication information and the third indication information, the transport block size corresponding to the fourth signal. Further, optionally, if a plurality of OFDM symbols are allocated to the PDSCH, for example, the time domain resource indication information included in the second indication information indicates the plurality of OFDM symbols, the UE may jointly determine, based on the time domain resource indication information, the first indication information, and the third indication information, the transport block size corresponding to the fourth signal. Alternatively, it may be considered that, to determine the transport block size corresponding to the fourth signal, reference may be made to parameters such as a quantity of OFDM symbols allocated to the PDSCH, a quantity of time-domain modulation symbols of the fourth signal in each OFDM symbol, and the MCS corresponding to the fourth signal. As shown in FIG. 6, a signal (the fourth signal) needed by the UE occupies only a part of time-domain modulation symbols (for example, *x*₁(*n*)) in the third signal. Even if the fourth signal fully occupies the first bandwidth in frequency domain, the fourth signal and another signal (for example, *x*₂(*n*)) perform joint occupation in frequency domain. Therefore, in this embodiment of this application, the UE may determine, based on the first indication information, the transport block size corresponding to the fourth signal, and does not need to determine, based on the frequency domain resource indication information in the second indication information, the transport block size corresponding to the fourth signal.

### (3) CRC check

After decoding, the UE may further perform the CRC check on a decoding result. If the check succeeds, the UE considers that the first original information from the network device is correctly received. If the check fails, the UE considers that the first original information from the network device is not correctly received. In this case, the UE may request the network device to perform retransmission, or retransmission may not be performed.

Optionally, two downlink transmission manners: the single-carrier OFDM and conventional OFDM that are supported in this embodiment of this application may also be switched. For example, the network device may indicate the UE to use a transmission manner. For example, in an indication manner, a special value of the first indication information is used for indication. For example, when the value of the first indication information is a first value, it indicates to use the conventional OFDM transmission manner, and the UE may receive the first signal in the conventional OFDM transmission manner. Alternatively, when the value of the first indication information is not a first value, it indicates to use the single-carrier OFDM, and the UE may receive the first signal in the single-carrier OFDM transmission manner provided in this embodiment of this application. Optionally, the first value is, for example, all 0s or all 1s, or may be another value. This is not limited. For example, the first value may be all 0s because in this case, it is equivalent to that no time-domain modulation signal in the third signal is indicated as the fourth signal. Therefore, a useless state like all 0s may be used to indicate to fall back to a conventional non-DFT OFDM transmission mode, and independent indication signaling does not need to be designed, thereby reducing overheads of the indication signaling. If the UE receives the first signal in the conventional OFDM manner, the UE may perform S503 and S504, and does not need to perform S505 and S506. For example, after obtaining the second signal, the UE may directly perform processing processes such as constellation demodulation, decoding, and a CRC check on the second signal, and does not need to perform processing such as IDFT on the second signal.

2. The fourth signal is a downlink control channel. The downlink control channel is, for example, a physical downlink control channel, for example, a PDCCH, or the downlink control channel may be another downlink control channel. In this embodiment of this application, the PDCCH is used as an example.

In this case, before receiving the first signal, the UE may determine a resource occupied by the first signal. The resource occupied by the first signal includes a frequency domain resource and a time domain resource.

The frequency domain resource occupied by the first signal includes, for example, a bandwidth used to receive the PDCCH, and may specifically include a control resource set (CORESET), a frequency domain subband (subband), a BWP, or the like. For example, the UE may determine, by using RRC dedicated signaling or broadcast signaling from the network device, the frequency domain resource occupied by the first signal, or the UE may determine, based on information predefined in a protocol, the frequency domain resource occupied by the first signal. Alternatively, the frequency domain resource occupied by the first signal may be determined based on blind detection of the UE. For example, the UE assumes at least two bandwidths, performs the foregoing IDFT processing separately based on the at least two bandwidths for time domain transform, and then detects the PDCCH separately in time-domain modulation symbols corresponding to the at least two bandwidths. For example, the at least two bandwidths are 20 RBs and 80 RBs respectively. The network device selects the 20 RBs or the 80 RBs based on an actual bandwidth occupation requirement to send the PDCCH, and the UE needs to perform blind detection on the two bandwidths. For example, the UE assumes that an IDFT length corresponding to the 20 RBs is 20×12=240 for time domain transform, and then detects the PDCCH. In addition, the UE may alternatively assume that an IDFT length corresponding to the 80 RBs is 80×12=960 for time domain transform, and then detect the PDCCH. Optionally, the at least two bandwidths may be further associated with different DMRSs. For example, the at least two bandwidths are still the 20 RBs and the 80 RBs respectively. Different bandwidths may be associated with different DMRS sequences. The UE may determine an actual bandwidth of the current PDCCH by performing blind detection on the different DMRS sequences, and then the UE performs IDFT based on the actual bandwidth for time domain transform, to detect the PDCCH. The different DMRS sequences may be root indicators of different sequences, different cyclic shifts of different sequences, different scrambling codes of different sequences, or long and short truncated parts of a same sequence (for example, a sequence with a length of 20 RBs may be a part of a sequence with a length of 80 RBs). According to the foregoing method for detecting the frequency domain resource occupied by the first signal, the PDCCH can be sent and received more effectively by using a proper bandwidth.

The time domain resource occupied by the first signal includes, for example, M OFDM time domain symbols. The PDCCH may generally occupy a part or all of a 1^{st} OFDM symbol to a 3^{rd} OFDM symbol in one slot. Information such as a slot in which the PDCCH is located and a quantity of OFDM symbols occupied in the slot may be determined by the UE by using RRC dedicated signaling or broadcast signaling from the network device, or may be determined based on information predefined in a protocol.

If the fourth signal is the PDCCH, the UE may obtain the fourth signal by performing detection on the third signal, and the detection may also be referred to as blind detection. For example, the UE may determine at least one candidate control channel from the time-domain modulation symbol included in the third signal, where each candidate control channel may include L control channel elements, each control channel element may include at least one time-domain modulation symbol, and L is a positive integer. The control channel element is, for example, referred to as a control channel element (control channel element, CCE), or may have another name, and the CCE is used as an example below. Optionally, one control channel element may include at least one resource element group (resource element group, REG), and one REG may include 12 time-domain modulation symbols. It can be learned that, in this embodiment of this application, the candidate control channel used by the UE to detect the PDCCH no longer includes a frequency domain unit like an RB or a subcarrier, but includes a time-domain modulation symbol. The UE detects the at least one candidate control channel, and may obtain the fourth signal.

It may be understood as that, after obtaining the third signal, the UE may perform blind detection on candidate control channels at various possible positions in time domain. If a blind detection result passes the CRC check, it indicates that the UE correctly receives the fourth signal. These candidate control channels may be classified into different CCE levels, and different CCE levels include different quantities of CCEs. For example, each candidate control channel at a CCE level 2 may include two CCEs, each candidate control channel at a CCE level 4 may include four CCEs, and so on. The CCE level includes, for example, 1, 2, 4, 8, or 16.

The UE determines at least one candidate control channel from a time domain symbol included in the third signal. For example, in a manner, the UE may determine, based on an identifier of the UE, a start CCE in the time-domain modulation symbol included in the third signal, and the UE may determine the at least one candidate control channel based on the start CCE and a quantity of candidate control channel detections. Optionally, the quantity of candidate control channel detections may also be determined based on the identifier of the UE, may be predefined in a protocol, or may be preconfigured by the network device for the UE.

Optionally, the UE may separately perform detection on candidate control channels at various CCE levels. Therefore, the UE may separately determine, for different CCE levels, the start CCE in the time-domain modulation symbol included in the third signal and the quantity of candidate control channel detections. For example, before performing blind detection on the candidate control channels at the various CCE levels, the UE may further determine search spaces. Generally, the search spaces are respectively defined based on different CCE levels, that is, the UE may determine a search space at each CCE level. That the UE determines a search space at a CCE level is to determine, in the third signal, a start CCE of the search space corresponding to the CCE level, and a quantity of candidate control channel detections corresponding to the search space corresponding to the CCE level. The search space generally includes a common search space and a UE-specific search space. For the common search space, a start CCE may not be determined based on the UE identifier, but may be determined based on a parameter shared by UEs or a default parameter. For the UE-specific search space, a start CCE may be determined by using a factor like the UE identifier mentioned above.

The CCE level 4 is used as an example. It is assumed that a quantity of OFDM symbols occupied by the CORESET is 2, a total quantity of time-domain modulation symbols included by the third signal in the two OFDM time domain symbols is 2880, and one CCE includes 72 time-domain modulation symbols. In this case, there are 2880/72=40 CCEs, and based on the identifier of the UE, the UE may determine an index of a start CCE in the 40 CCEs (for example, indexes of the 40 CCEs are 0 to 39), and determine a quantity of candidate control channel detections.

The foregoing example is still used. For example, if the UE determines, based on the identifier of the UE, that the index of the start CCE is 10 and the quantity of candidate control channel detections is 4, the UE may determine that a search space at the CCE level 4 includes CCEs whose CCE indexes are 10 to 25, the search space includes four candidate control channels, and indexes of CCEs occupied by the four candidate control channels are {CCEs 10 to 13}, {CCEs 14 to 17}, {CCEs 18 to 21}, and {CCEs 22 to 25} respectively. The UE may detect the four candidate control channels, to determine whether there is the fourth signal.

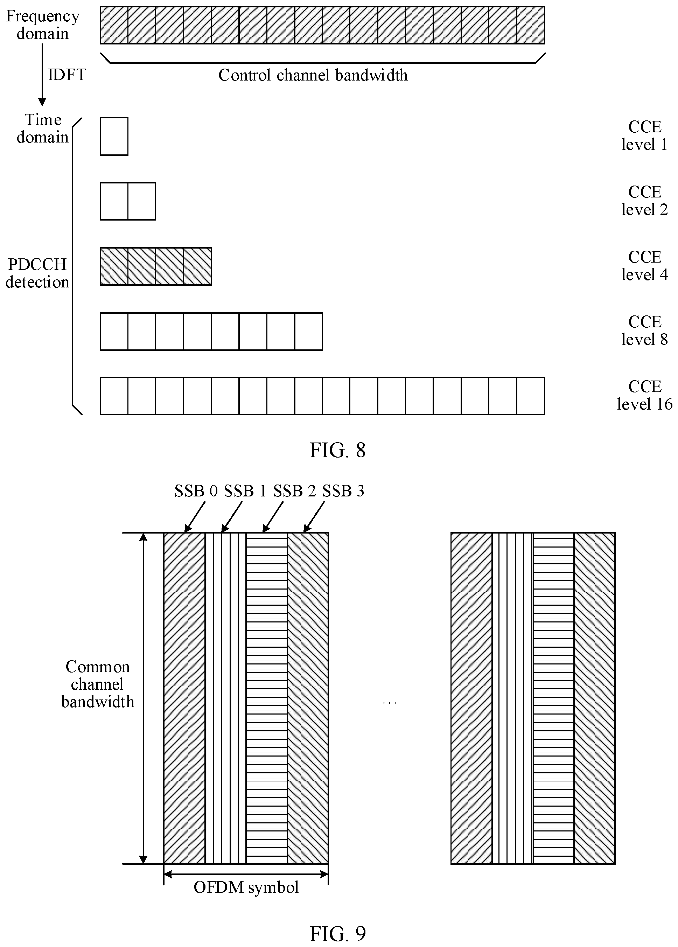

Refer to FIG. 8. That the UE detects candidate control channels at CCE levels 1, 2, 4, 8, and 16 respectively is used as an example. For example, the UE finally detects the fourth signal in the search space at the CCE level 4 (as shown by "\" boxes in FIG. 8).

3. The fourth signal is a downlink common channel. For example, the third signal includes at least one downlink common channel, and the fourth signal is one of the at least one downlink common channel. In this case, for the UE, obtaining the fourth signal from the third signal may include: determining each downlink common channel from the third signal.

When the third signal includes the downlink common channel, the first bandwidth described above is, for example, a bandwidth of the downlink common channel. For example, the downlink common channel is an SSB, and the first bandwidth may be a bandwidth of the SSB, for example, 80 RBs. Optionally, if the third signal includes a plurality of downlink common channels (for example, the plurality of downlink common channels may correspond to different beam directions), bandwidths of the plurality of downlink common channels may all be the first bandwidth, for example, 80 RBs.

Optionally, the at least one downlink common channel included in the third signal may be time division multiplexed in one OFDM symbol. For example, the third signal includes the fourth signal and the fifth signal, the fourth signal and the fifth signal each are a downlink common channel (the fourth signal and the fifth signal may be downlink common channels of a same type, for example, each are an SSB; or the fourth signal and the fifth signal may be downlink common channels of different types, for example, the fourth signal is an SSB, and the fifth signal is a PDCCH used to schedule a system message), and the fourth signal and the fifth signal may be time division multiplexed in one OFDM symbol.

FIG. 9 shows an example in which the third signal includes four downlink common channels. For example, the four downlink common channels are all SSBs: an SSB 0 to an SSB 3. For example, the UE determines that the third signal includes 960 time-domain modulation symbols in one OFDM symbol (for example, if the first bandwidth is 80 RBs, the UE performs IDFT on the second signal to obtain the third signal, and a quantity of points of the IDFT is 80×12=960, the third signal includes 960 time-domain modulation symbols in one OFDM symbol). The UE may also determine a quantity of time-domain modulation symbols occupied by one SSB in one OFDM symbol. For example, the quantity is 240. In this case, the UE may determine that the OFDM symbol includes four SSBs. Optionally, for different SSBs in one OFDM symbol, the network device may use a same precoding manner or different precoding manners. The different SSBs in the one OFDM symbol may point to a same sending direction or different sending directions.

As described above, different downlink common channels may be time division multiplexed in one OFDM symbol. In addition, other channels may also be time division multiplexed in one OFDM symbol. For example, an SSB and a PDCCH, an SSB and a PDSCH, a PBCH and a PDSCH, a PBCH and a PDSCH, a PDCCH and a PDCCH, a PDCCH and a PDSCH, or a PDSCH and a PDSCH may be time division multiplexed in one OFDM symbol. The PDSCH may include downlink data, and/or include other common information (for example, one or more messages such as a system message, a paging message, and a random access response message). The following uses an example in which a PDCCH and a PDSCH are time division multiplexed in one OFDM symbol for description.

In a current protocol, the PDCCH and the PDSCH generally occupy different OFDM symbols. For example, a PDCCH CORESET occupies first two OFDM symbols of one slot, and a PDSCH scheduled by using the PDCCH occupies last 12 OFDM symbols of the slot. Alternatively, in the first two OFDM symbols, the PDCCH and the PDSCH scheduled by using the PDCCH may also occupy different RBs to implement frequency division multiplexing. However, according to this embodiment of this application, in the single-carrier OFDM transmission manner, the PDCCH and the PDSCH may be time division multiplexed in one OFDM symbol.

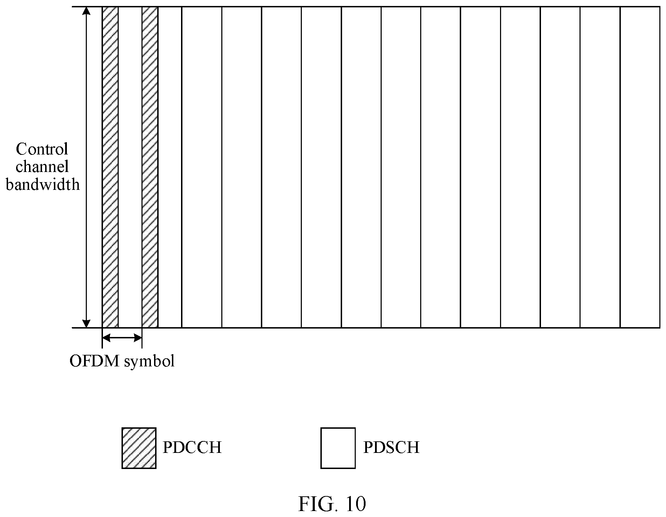

For example, in each of OFDM symbols (for example, a 1^{st} OFDM symbol of one slot (a quantity of OFDM symbols corresponding to a CORESET is 1), first two OFDM symbols of one slot (a quantity of OFDM symbols corresponding to a CORESET is 2), or first three OFDM symbols of one slot (a quantity of OFDM symbols corresponding to a CORESET is 3), which is not specifically limited) occupied by the PDCCH, the PDCCH and the PDSCH may be time division multiplexed. Optionally, the PDSCH may be the PDSCH scheduled by using the PDCCH, or may not be associated with the PDCCH. In addition, in OFDM symbols (for example, including last 13 OFDM symbols of one slot, including last 12 OFDM symbols of one slot, or including last 11 OFDM symbols of one slot) that are not occupied by the PDCCH, transmission may still be performed on the PDSCH but not be performed on the PDCCH. FIG. 10 shows an example in which the PDCCH and the PDSCH are time division multiplexed in one OFDM symbol. In FIG. 10, an example in which the PDCCH occupies first two OFDM symbols in one slot is used. It can be learned that in each of the two OFDM symbols, the PDCCH and the PDSCH are time division multiplexed. It can be learned that, a relationship between the PDCCH and the PDSCH scheduled by using the PDCCH may be as follows: For a first part of OFDM symbols (for example, the first two OFDM symbols) occupied by the PDCCH and the PDSCH, the PDCCH and the PDSCH are time division multiplexed in each of the first part of OFDM symbols; and a second part of OFDM symbols (for example, including remaining OFDM symbols other than the first part of OFDM symbols in OFDM symbols occupied by the PDCCH and the PDSCH) are occupied by the PDSCH but not occupied by the PDCCH. The OFDM symbols occupied by the PDCCH and the PDSCH are all OFDM symbols occupied by the PDCCH and the PDSCH, and may include OFDM symbols occupied only by the PDSCH but not occupied by the PDCCH, and include OFDM symbols jointly occupied by the PDCCH and the PDSCH.

When the PDCCH and the PDSCH are time division multiplexed in one OFDM symbol, and for example, a signal that needs to be detected by the UE is the PDCCH (for example, the PDCCH is the fourth signal), the UE may determine a candidate control channel from a time-domain modulation symbol included in the OFDM symbol, and may determine the fourth signal by detecting the candidate control channel. For example, the PDCCH occupies first two OFDM symbols of one slot. The UE performs IDFT on the second signal based on the first bandwidth (for example, a CORESET bandwidth, for example, 20 RBs) to obtain the third signal, and a quantity of points of the IDFT is 20×12=240. It is assumed that the UE detects the PDCCH based on the CCE level 4 in time-domain modulation symbols included in one OFDM symbol occupied by the third signal. For example, if the third signal occupies two OFDM symbols, each OFDM symbol occupied by the third signal includes 240 time-domain modulation symbols, the two OFDM symbols include 240×2=480 time-domain modulation symbols in total, the UE detects the PDCCH at the CCE level 4 in the 480 time-domain modulation symbols, and the PDCCH occupies 288 time-domain modulation symbols (assuming that each CCE occupies 6 RBs, four CCEs occupy 4×6×12=288 time-domain modulation symbols in the two OFDM symbols). In this case, except the time domain symbols occupied by the PDCCH, remaining time-domain modulation symbols in the two OFDM symbols may be occupied by the PDSCH (for example, the PDSCH may occupy 8×12×2=192 time-domain modulation symbols in total). In addition, in the foregoing 20 RBs of remaining 12 OFDMs in the slot, transmission is performed only on the PDSCH but not performed on the PDCCH. In the foregoing example, other information that may be further carried by the two OFDM symbols, for example, a DMRS, is not considered. This is merely used as an example to describe the solutions.

For a scenario in which other channels are time division multiplexed in one OFDM, implementation principles are similar, and details are not described again.

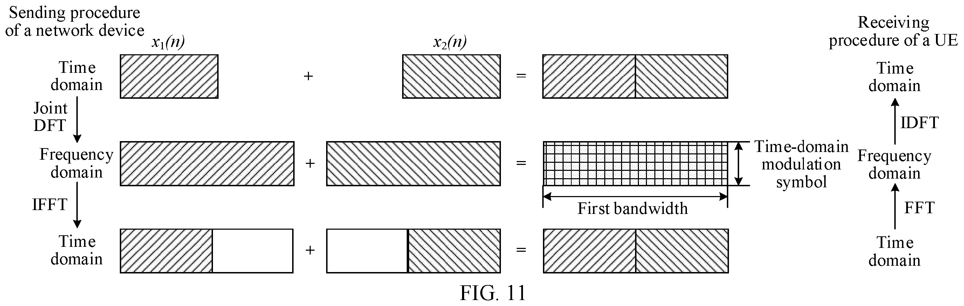

In conclusion, FIG. 11 is a diagram of processing processes of two ends: a network device and a UE according to an embodiment of this application. In this embodiment of this application, the network device may perform joint DFT on signals of a plurality of UEs (or signals of a plurality of channels) instead of separately performing DFT. In comparison with a solution of separately performing DFT, in this embodiment of this application, after the network device performs IFFT on signals on which joint DFT is performed, a probability of mutual superimposition of signals of different users or different channels can be reduced, thereby further reducing a PAPR.

Optionally, in this embodiment of this application, in addition to sending a first signal, the network device may further send a DMRS, so that the UE can perform channel estimation and the like on a received signal based on the DMRS.

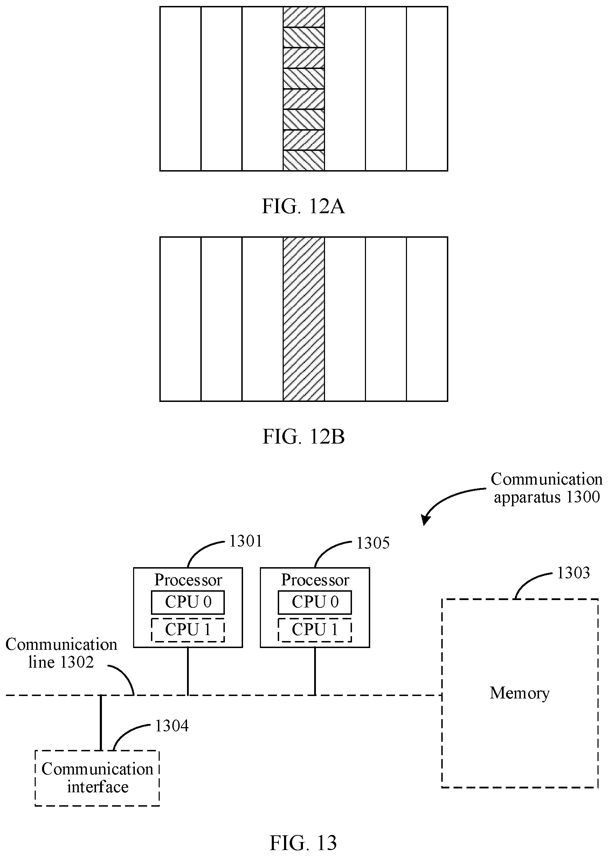

In an optional implementation of the DMRS, the network device may send DMRSs for different signals respectively. For example, the DMRSs and the signals may be in one-to-one correspondence. For example, the network device may send a DMRS 1 for a fourth signal (or for first original information), and may send a DMRS 2 for a fifth signal (or for second original information). A target receiving end of the fourth signal may perform channel estimation based on the DMRS 1, to demodulate the fourth signal; and a target receiving end of the fifth signal may perform channel estimation based on the DMRS 2, to demodulate the fifth signal. In this case, if the first signal includes a plurality of signals (or a third signal includes a plurality of signals), the network device may send a plurality of DMRSs. Optionally, the plurality of DMRSs may be included in one OFDM symbol. For example, the plurality of DMRSs may be frequency division multiplexed or code division multiplexed in the OFDM symbol. For example, a frequency division multiplexing manner is comb (comb) distribution. For example, for the foregoing case in which a PDCCH and a PDSCH are time division multiplexed in one OFDM symbol, if the PDCCH is sent by using a wide beam, and the PDSCH is sent by using a narrow beam, the PDCCH and the PDSCH may respectively correspond to different DMRSs, to improve accuracy of channel estimation. FIG. 12A is a diagram of comb distribution of DMRSs in one OFDM symbol. In FIG. 12A, two DMRSs are used as an example, where "\" represents one DMRS, and "/" represents the other DMRS. A blank box in FIG. 12A represents the first signal, where the first signal includes two signals; or a blank box in FIG. 12A represents the third signal, where the third signal includes two signals, for example, the fourth signal and the fifth signal.

Alternatively, in another optional implementation of the DMRS, the network device may send one DMRS for different signals, and the DMRS may be used for channel estimation of all signals included in the first signal (or all signals included in a third signal). In other words, a plurality of signals may share one DMRS. For example, for the foregoing case in which a plurality of signals are time division multiplexed in one OFDM symbol, the network device only needs to send one DMRS. In this case, the UE may demodulate, based on the DMRS, any signal included in the third signal. A plurality of signals share one DMRS. This helps reduce a quantity of DMRSs, reduce transmission overheads, and cause more resources to be used for transmission of another signal. FIG. 12B shows an example in which different signals share one DMRS. A shadow in FIG. 12B represents a DMRS, and the DMRS occupies, for example, one OFDM symbol. A blank box in FIG. 12B represents the first signal, where the first signal includes a plurality of signals; or a blank box in FIG. 12B represents the third signal, where the third signal includes a plurality of signals. However, in FIG. 12B, the DMRS shown by the shadow is used for the plurality of signals included in the first signal (or the third signal).

Optionally, regardless of whether the network device sends DMRSs for different signals respectively or sends one DMRS for all signals, the DMRS and a part or all of signals included in the third signal may occupy different OFDM symbols. For example, if the third signal includes the fourth signal and the fifth signal, the DMRS and the fourth signal may occupy different OFDM symbols, and/or the DMRS and the fifth signal may occupy different OFDM symbols. For example, in each of FIG. 12A and FIG. 12B, the DMRS and the signal included in the third signal occupy different OFDM symbols. The DMRS and the signal are located on different OFDM symbols. This can ensure that channel estimation may be performed in frequency domain on the OFDM symbol on which the DMRS is located, and time division multiplexing of the DMRS and the signal in one OFDM does not need to be supported. Therefore, processes such as channel estimation, demodulation, and equalization are simplified.

As described above, if the network device sends a plurality of DMRSs, the plurality of DMRSs may be code division multiplexed. For example, the plurality of DMRSs may be superimposed in time domain and/or frequency domain, but signals corresponding to the plurality of DMRSs may not be superimposed in time domain. For example, the network device sends the DMRS 1 and the DMRS 2, the two DMRSs have a same time domain position and a same frequency domain position, and the two DMRSs are code division multiplexed. The DMRS 1 corresponds to the fourth signal, the DMRS 2 corresponds to the fifth signal, and time domain resources of the fourth signal and the fifth signal are different. For example, the fourth signal and the fifth signal respectively occupy (or include) different time-domain modulation symbols in the third signal. For example, the target receiving end of the fourth signal performs channel estimation based on the DMRS 1. Because the DMRS 1 and the DMRS 2 are superimposed for sending, a receive power spectral density of the DMRS 1 is actually lower than receive power corresponding to the fourth signal. For example, the power spectral density of the DMRS 1 is half of the receive power of the fourth signal. Therefore, to improve demodulation accuracy, in this embodiment of this application, when demodulating the fourth signal, the UE may further refer to power ratio indication information in addition to a channel estimation result obtained based on the DMRS corresponding to the fourth signal. The power ratio indication information may indicate a power ratio of the DMRS corresponding to the fourth signal to the fourth signal. The power ratio may be less than or equal to 1. For example, the power ratio may be selected from 0.5 and 1. In other words, the power ratio may be 0.5 or 1. For example, when neither the DMRS nor the fourth signal is superimposed with another signal, a power ratio 1 is used. Alternatively, if the DMRS is superimposed with another DMRS (for example, code division), but the fourth signal is not superimposed with another signal in time domain, a power ratio 0.5 may be used, or another preset or indicated power ratio less than 1 may be used. The UE may obtain, based on the channel estimation result and the power ratio, the receive power corresponding to the fourth signal, to demodulate the fourth signal. For example, a manner of obtaining, based on the channel estimation result and the power ratio, the receive power corresponding to the fourth signal is: calculating a product of the channel estimation result and the power ratio, where the product is used as the receive power corresponding to the fourth signal.

The power ratio indication information is, for example, from the network device. For example, the network device sends the power ratio indication information by using RRC dedicated signaling, broadcast signaling, or physical layer signaling (for example, DCI). Alternatively, the power ratio indication information may be predefined in a protocol. The power ratio indication information may occupy one or more bits. For example, the power ratio indication information occupies one bit. If a value of the bit is "1", "true", or the like, it indicates that the power ratio is 1; or if an indication of the bit is "0", "false", or the like, it indicates that the power ratio is 0.5. Alternatively, the power ratio indication information may occupy more bits, and correspondingly, there may be more values and/or more indication manners. This is not limited.

In conclusion, in embodiments of this application, single-carrier OFDM may be used in downlink transmission, thereby reducing a PAPR of the downlink transmission, and improving performance of the downlink transmission. In embodiments of this application, it is considered that the downlink transmission may be that a network device simultaneously sends signals to a plurality of users, or the network device sends signals on a plurality of channels. Therefore, in embodiments of this application, simultaneous transmission of the signals of the plurality of users or the plurality of channels may be further implemented. For example, a third signal may include a plurality of signals. When the simultaneous transmission of the signals of the plurality of users or the plurality of channels is implemented, in embodiments of this application, signals of different users or different channels do not need to be scheduled in a time division manner, thereby reducing a signal transmission delay. In addition, a signal transmitting end may perform DFT on the signals of the plurality of users or the plurality of channels together, instead of performing DFT on the signals of different users or different channels separately. Correspondingly, a signal receiving end may perform IDFT on received signals together. If the signal transmitting end (for example, the network device) performs DFT on the signals of different users or different channels separately, after IFFT is performed on the signals on which DFT is performed, the signals of different users or different channels may be superimposed, causing a PAPR increase. However, in embodiments of this application, the signal transmitting end performs DFT on the signals of the plurality of users or the plurality of channels together. In this case, after IFFT is performed on the signals on which DFT is performed, a probability of mutual superimposition of signals of different users or different channels is reduced, thereby further reducing the PAPR.

FIG. 13 is a diagram of a structure of a communication apparatus according to an embodiment of this application. The communication apparatus 1300 may be a circuit system of the UE in the embodiment shown in FIG. 5, and is configured to implement the method corresponding to the UE in the foregoing method embodiments. Alternatively, the communication apparatus 1300 may be a circuit system of the network device in the embodiment shown in FIG. 5, and is configured to implement the method corresponding to the network device in the foregoing method embodiments. For example, a circuit system is a chip system.

The communication apparatus 1300 includes at least one processor 1301. The processor 1301 may be configured for internal processing of the apparatus, to implement a specific control processing function. Optionally, the processor 1301 includes instructions. Optionally, the processor 1301 may store data. Optionally, different processors may be independent devices, and may be located at different physical positions, or may be located on different integrated circuits. Optionally, different processors may be integrated into one or more processors, for example, integrated into one or more integrated circuits.

Optionally, the communication apparatus 1300 includes one or more memories 1303, configured to store instructions. Optionally, the memory 1303 may further store data. The processor and the memory may be separately disposed, or may be integrated together.

Optionally, the communication apparatus 1300 includes a communication line 1302 and at least one communication interface 1304. The memory 1303, the communication line 1302, and the communication interface 1304 are all optional, and therefore are all represented by dashed lines in FIG. 13.

Optionally, the communication apparatus 1300 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 1300 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1301 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1302 may include a path for transmission of information between the foregoing components.

The communication interface 1304 is any apparatus like a transceiver, and is configured to communicate with another device or a communication network, for example, Ethernet, a radio access network (radio access network, RAN), a wireless local area network (wireless local area network, WLAN), or a wired access network.

The memory 1303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of an instruction or a data structure and that can be accessed by a computer, but is not limited thereto. The memory 1303 may exist independently, and is connected to the processor 1301 through the communication line 1302. Alternatively, the memory 1303 may be integrated with the processor 1301.

The memory 1303 is configured to store computer-executable instructions for executing the solutions of this application, and the processor 1301 controls the execution. The processor 1301 is configured to execute the computer-executable instructions stored in the memory 1303, to implement the steps performed by the UE or the network device in the embodiment shown in FIG. 5.

Optionally, the computer-executable instructions in this embodiment of this application may also be referred to as application program code. This is not specifically limited in this embodiment of this application.

In specific implementation, in an embodiment, the processor 1301 may include one or more CPUs such as a CPU 0 and a CPU 1 in FIG. 13.

In specific implementation, in an embodiment, the communication apparatus 1300 may include a plurality of processors such as the processor 1301 and a processor 1305 in FIG. 13. Each of the processors may be a single-core (single-CPU) processor or a multi-core (multi-CPU) processor. The processor herein may be one or more devices, circuits, and/or processing cores configured to process data (for example, computer program instructions).

When the apparatus shown in FIG. 13 is a chip, for example, a chip of the UE or a chip of the network device, the chip includes the processor 1301 (and may further include the processor 1305), the communication line 1302, and the communication interface 1304, and optionally, may include the memory 1303. Specifically, the communication interface 1304 may be an input interface, a pin, a circuit, or the like. The memory 1303 may be a register, a cache, or the like. The processor 1301 and the processor 1305 each may be a general-purpose CPU, a microprocessor, an ASIC, or one or more integrated circuits configured to control program execution of the communication method in any one of the foregoing embodiments.

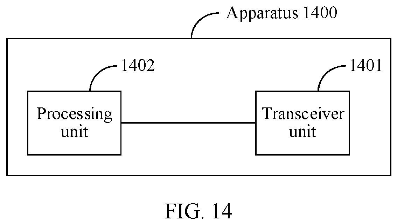

In embodiments of this application, division into functional modules may be performed on the apparatus based on the foregoing method examples. For example, division into functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in actual implementation. For example, when division into functional modules is performed based on corresponding functions, FIG. 14 is a diagram of an apparatus. The apparatus 1400 may be the UE or the network device in the foregoing method embodiments, or a chip in the UE or a chip in the network device. The apparatus 1400 includes a processing unit 1402 and a transceiver unit 1401.

It should be understood that the apparatus 1400 may be configured to implement the steps performed by the UE or the network device in the communication method in embodiments of this application. For related features, refer to the embodiment shown in FIG. 5. Details are not described herein again.

Optionally, functions/implementation processes of the transceiver unit 1401 and the processing unit 1402 in FIG. 14 may be implemented by the processor 1301 in FIG. 13 by invoking the computer-executable instructions stored in the memory 1303. Alternatively, a function/an implementation process of the processing unit 1402 in FIG. 14 may be implemented by the processor 1301 in FIG. 13 by invoking the computer-executable instructions stored in the memory 1303, and a function/an implementation process of the transceiver unit 1401 in FIG. 14 may be implemented through the communication interface 1304 in FIG. 13.

Optionally, when the apparatus 1400 is a chip or a circuit, the function/implementation process of the transceiver unit 1401 may alternatively be implemented through a pin, a circuit, or the like. Optionally, the transceiver unit 1401 may include a sending unit and/or a receiving unit. The sending unit is configured to implement a sending function, and the receiving unit is configured to implement a receiving function. Alternatively, the transceiver unit 1401 may be an integral module that can implement a sending function and/or a receiving function. Optionally, the transceiver unit 1401 may be implemented by a transceiver.

This application further provides a computer-readable storage medium. The computer-readable storage medium stores a computer program or instructions. When the computer program or the instructions are run, the method performed by the UE or the network device in the foregoing method embodiments is implemented. In this way, the functions in the foregoing embodiments may be implemented in a form of a software functional unit and sold or used as an independent product. Based on such an understanding, the technical solutions of this application essentially, or the part making contributions, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions via a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with one digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor can read information from the storage medium and write information into the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components in the terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a function specified in one or more procedures in the flowcharts and/or in one or more blocks in the block diagrams.

Content in embodiments of this application may be mutually referenced. Unless otherwise specified or logically conflicted, terms and/or descriptions in different embodiments are consistent and may be mutually referenced, and technical features in different embodiments may be combined based on an internal logical relationship thereof, to form a new embodiment.

It may be understood that, in embodiments of this application, the UE and/or the network device may perform some or all of the steps in embodiments of this application. The steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, wherein the method comprises:
receiving a first signal;
performing fast Fourier transform on the first signal to obtain a second signal, wherein the second signal comprises a frequency-domain modulation symbol;
performing inverse discrete Fourier transform on the second signal to obtain a third signal, wherein the third signal comprises a time-domain modulation symbol; and
obtaining a fourth signal from the third signal.

2. The method according to claim 1, wherein obtaining the fourth signal from the third signal comprises:
obtaining the fourth signal from the third signal based on first indication information, wherein the first indication information indicates a resource position, in a time unit, of a time-domain modulation symbol comprised in the fourth signal.

3. The method according to claim 2, wherein that the first indication information indicates the resource position, in the time unit, of the time-domain modulation symbol comprised in the fourth signal comprises:
the first indication information indicates a start time-domain modulation symbol of the fourth signal in the time unit, and indicates a quantity of time-domain modulation symbols of the fourth signal in the time unit.

4. The method according to claim 2 or 3, wherein the method further comprises:
determining, based on second indication information, a time domain resource and a frequency domain resource that are occupied by the third signal.

5. The method according to any one of claims 1 to 4, wherein the method further comprises:
receiving first information, wherein the first information is used to schedule the fourth signal, the first information comprises first indication information, and the first indication information indicates a resource position, in a time unit, of a time-domain modulation symbol comprised in the fourth signal.

6. The method according to claim 5, wherein the first information further comprises third indication information, and the third indication information indicates a modulation and coding scheme of the fourth signal.

7. The method according to claim 6, wherein the method further comprises:
determining, based on the first indication information and the third indication information, a transport block size corresponding to the fourth signal.

8. The method according to claim 1, wherein obtaining the fourth signal from the third signal comprises:
determining at least one candidate control channel from the time-domain modulation symbol comprised in the third signal, wherein each candidate control channel comprises L control channel elements, each control channel element comprises at least one time-domain modulation symbol, and L is a positive integer; and
detecting the at least one candidate control channel.

9. The method according to claim 8, wherein determining the at least one candidate control channel from the time-domain modulation symbol comprised in the third signal comprises:
determining a start control channel element in the time-domain modulation symbol comprised in the third signal; and
determining the at least one candidate control channel based on the start control channel element and a quantity of candidate control channel detections.

10. The method according to any one of claims 1 to 9, wherein the third signal comprises the fourth signal and a fifth signal; and
the fourth signal and the fifth signal are time division multiplexed in one OFDM symbol.

11. The method according to any one of claims 1 to 10, wherein the third signal comprises the fourth signal and a fifth signal, the fourth signal is carried on a first channel, and the fifth signal is carried on a second channel.

12. The method according to claim 11, wherein
the first channel is a physical downlink control channel, the second channel is a physical downlink shared channel, and the first channel is used to schedule the second channel;
the first channel and the second channel each are a physical downlink control channel; or
the first channel and the second channel each are a downlink common channel.

13. The method according to any one of claims 1 to 12, wherein the third signal comprises the fourth signal and a fifth signal, and the method further comprises:
receiving a demodulation reference signal, wherein the demodulation reference signal is used for channel estimation of the fourth signal and the fifth signal, and/or the demodulation reference signal and the fourth signal and/or the fifth signal occupy different time units.

14. The method according to any one of claims 1 to 12, wherein the method further comprises:
receiving a demodulation reference signal and power ratio indication information, wherein the demodulation reference signal and the fourth signal occupy different time units, the demodulation reference signal is used for channel estimation of the fourth signal, the power ratio indication information indicates a power ratio of the demodulation reference signal to the fourth signal, and the power ratio is less than or equal to 1; and
demodulating the fourth signal based on a result of the channel estimation and the power ratio.

15. The method according to any one of claims 1 to 14, wherein the method further comprises:
determining a first modulation order and a second modulation order, wherein the first modulation order is a modulation order comprised in the modulation and coding scheme corresponding to the fourth signal, and the second modulation order is higher than the first modulation order; and
demodulating the fourth signal based on a part of constellation points in a constellation diagram corresponding to the second modulation order.

16. The method according to any one of claims 1 to 14, wherein the third signal comprises the fourth signal and a fifth signal, and the method further comprises:
determining a first modulation order and a second modulation order, wherein the first modulation order is a modulation order comprised in the modulation and coding scheme corresponding to the fourth signal, the second modulation order is a modulation order comprised in a modulation and coding scheme corresponding to the fifth signal, and the second modulation order is higher than the first modulation order;
demodulating the fourth signal based on a part of constellation points in a constellation diagram corresponding to the second modulation order; and
demodulating the fifth signal based on all of the constellation points in the constellation diagram corresponding to the second modulation order.

17. The method according to any one of claims 1 to 16, wherein performing inverse discrete Fourier transform on the second signal to obtain the third signal comprises:
performing inverse discrete Fourier transform on information of the second signal in each of M time units, to obtain the third signal, wherein the M time units are time units occupied by the first signal, and M is a positive integer.

18. A communication method, wherein the method comprises:
performing discrete Fourier transform on a third signal to obtain a second signal, wherein the second signal comprises a frequency-domain modulation symbol, the third signal comprises a fourth signal, and the fourth signal comprises a time-domain modulation symbol;
performing inverse fast Fourier transform on the second signal to obtain a first signal; and
sending the first signal.

19. The method according to claim 18, wherein the method further comprises:
sending first information, wherein the first information is used to schedule the fourth signal, the first information comprises first indication information, and the first indication information indicates a resource position, in a time unit, of the time-domain modulation symbol comprised in the fourth signal.

20. The method according to claim 19, wherein that the first indication information indicates the resource position, in the time unit, of the time-domain modulation symbol comprised in the fourth signal comprises:
the first indication information indicates a start time-domain modulation symbol of the fourth signal in the time unit, and indicates a quantity of time-domain modulation symbols of the fourth signal in the time unit.

21. The method according to claim 19 or 20, wherein the first information further comprises second indication information, and the second indication information indicates a time domain resource and a frequency domain resource that are occupied by the third signal.

22. The method according to any one of claims 19 to 21, wherein the first information further comprises third indication information, the third indication information indicates a modulation and coding scheme of the fourth signal, and the first indication information and the third indication information are used to determine a transport block size corresponding to the fourth signal.

23. The method according to claim 18, wherein before performing inverse fast Fourier transform on the second signal, the method further comprises:
determining at least one candidate control channel from a time-domain modulation symbol comprised in the third signal, wherein each candidate control channel comprises L control channel elements, each control channel element comprises at least one time-domain modulation symbol, and L is a positive integer; and
determining the fourth signal from the at least one candidate control channel, wherein the fourth signal is one of the at least one candidate control channel.

24. The method according to claim 23, wherein determining the at least one candidate control channel from the time-domain modulation symbols comprised in the third signal comprises:
determining a start control channel element in the time-domain modulation symbol comprised in the third signal; and
determining the at least one candidate control channel based on the start control channel element and a quantity of candidate control channel detections.

25. The method according to any one of claims 18 to 24, wherein the third signal comprises the fourth signal and a fifth signal; and
the fourth signal and the fifth signal are time division multiplexed in one OFDM symbol.

26. The method according to any one of claims 18 to 25, wherein the third signal comprises the fourth signal and a fifth signal, the fourth signal is carried on a first channel, and the fifth signal is carried on a second channel.

27. The method according to claim 26, wherein
the first channel is a physical downlink control channel, the second channel is a physical downlink shared channel, and the first channel is used to schedule the second channel;
the first channel and the second channel each are a physical downlink control channel; or
the first channel and the second channel each are a downlink common channel.

28. The method according to any one of claims 18 to 27, wherein the third signal comprises the fourth signal and a fifth signal, and the method further comprises:
sending a demodulation reference signal, wherein the demodulation reference signal is used for channel estimation of the fourth signal and the fifth signal, and/or the demodulation reference signal and the fourth signal and/or the fifth signal occupy different time units.

29. The method according to any one of claims 18 to 27, wherein the method further comprises:
sending a demodulation reference signal and power ratio indication information, wherein the demodulation reference signal and the fourth signal occupy different time units, the demodulation reference signal is used for channel estimation of the fourth signal, the power ratio indication information indicates a power ratio of the demodulation reference signal to the fourth signal, and the power ratio is less than or equal to 1.

30. The method according to any one of claims 18 to 29, wherein the method further comprises:
determining a first modulation order and a second modulation order, wherein the first modulation order is a modulation order comprised in the modulation and coding scheme corresponding to the fourth signal, and the second modulation order is higher than the first modulation order; and
performing constellation modulation on the fourth signal based on a part of constellation points in a constellation diagram corresponding to the second modulation order.

31. The method according to claim 30, wherein the third signal comprises the fourth signal and the fifth signal, the second modulation order is a modulation order comprised in a modulation and coding scheme corresponding to the fifth signal, and the method further comprises:
performing constellation modulation on the fifth signal based on all of the constellation points in the constellation diagram corresponding to the second modulation order.

32. The method according to any one of claims 18 to 31, wherein performing discrete Fourier transform on the third signal to obtain the second signal comprises:
performing discrete Fourier transform on information of the third signal in each of M time units, to obtain the second signal, wherein the M time units are time units occupied by the first signal, and M is a positive integer.

33. A communication apparatus, wherein the communication apparatus comprises a processing unit and a transceiver unit, and the processing unit is coupled to the transceiver unit, to perform the method according to any one of claims 1 to 17, or perform the method according to any one of claims 18 to 32.

34. A communication apparatus, wherein the communication apparatus comprises a processor coupled to a memory, the memory is configured to store a computer program, and the processor is configured to execute the computer program stored in the memory, to enable the communication apparatus to perform the method according to any one of claims 1 to 17, or enable the communication apparatus to perform the method according to any one of claims 18 to 32.

35. A computer-readable storage medium, wherein the computer-readable storage medium is configured to store a computer program, and when the computer program is run on a computer, the computer is enabled to perform the method according to any one of claims 1 to 17, or the computer is enabled to perform the method according to any one of claims 18 to 32.

36. A computer program product, wherein the computer program product comprises a computer program, and when the computer program is run on a computer, the computer is enabled to perform the method according to any one of claims 1 to 17, or the computer is enabled to perform the method according to any one of claims 18 to 32.

37. A chip, wherein the chip comprises:
a processor and an interface, wherein the processor is configured to invoke instructions from the interface and run the instructions, and when the processor executes the instructions, the method according to any one of claims 1 to 17 is implemented, or the method according to any one of claims 18 to 32 is implemented.
